# EUROPÄISCHE PATENTSCHRIFT

(11) **EP 3 986 645 B1**
(45) Veröffentlichungstag und Bekanntmachung des Hinweises auf die Patenterteilung: **04.10.2023**
(21) Anmeldenummer: 20733405.3
(22) Anmeldetag: 16.06.2020
(51) Int. Cl.: B22F 7/06, B22F 10/28, B22F 10/34, B22F 10/43, B22F 10/73, B22F 12/13, B22F 12/58, B29C 64/153, B29C 64/188, B29C 64/295, B29C 64/336, B29C 64/357, B33Y 10/00, B33Y 30/00, B33Y 40/00, B33Y 40/20, B33Y 50/02, B33Y 70/10

(54) **VERFAHREN UND VORRICHTUNG ZUR HERSTELLUNG EINES MULTIMATERIALWERKSTÜCKS**
METHOD AND APPARATUS FOR MANUFACTURING A MULTI-MATERIAL WORKPIECE
PROCÉDÉ ET DISPOSITIF DE FABRICATION D'UNE PIÈCE MULTI-MATÉRIAUX

(30) Priorität: 18.06.2019 DE 102019116503
(43) Veröffentlichungstag der Anmeldung: 27.04.2022
(73) Patentinhaber: SLM Solutions Group AG, 23560 Lübeck (DE)
(72) Erfinder: KROL, Toni Adam, 23560 Lübeck (DE); STENGEL, Christopher, 23560 Lübeck (DE); SCHWARZE, Dieter, 23560 Lübeck (DE)
(74) Vertreter: Schicker, Silvia
(86) Internationale Anmeldenummer: PCT/EP2020/066553
(87) Internationale Veröffentlichungsnummer: WO 2020/254284

(56) Entgegenhaltungen:
- DE-A1- 10 148 967
- JP-A- 2009 001 900
- JP-A- 2017 145 178

## Beschreibung

Die Erfindung betrifft ein Verfahren zur Herstellung eines dreidimensionalen Werkstücks mithilfe eines generativen Schichtbauverfahrens aus mehr als einem Material. Ferner betrifft die Erfindung eine Vorrichtung zur Herstellung eines derartigen dreidimensionalen Werkstücks.

Bei generativen Verfahren zur Herstellung dreidimensionaler Werkstücke und insbesondere bei generativen Schichtbauverfahren ist es bekannt, eine zunächst formlose oder formneutrale Formmasse, zum Beispiel ein Rohstoffpulver, schichtweise auf einen Träger aufzutragen und durch ortsspezifisches Bestrahlen zu verfestigen, um letztendlich ein Werkstück einer gewünschten Form zu erhalten. Das Bestrahlen kann mittels elektromagnetischer Strahlung, beispielsweise in Form von Laserstrahlung erfolgen. In einem Ausgangszustand kann die Formmasse zunächst als Granulat, als Pulver oder als flüssige Formmasse vorliegen und infolge der Bestrahlung selektiv oder, anders ausgedrückt, ortsspezifisch verfestigt werden. Die Formmasse kann zum Beispiel Keramik-, Metall- oder Kunststoffmaterialien umfassen und auch Materialgemische hieraus. Bei einer Variante eines generativen Schichtbauverfahrens, dem sogenannten Pulverbettschmelzen, werden metallische und/oder keramische Rohstoffpulvermaterialien zu dreidimensionalen Werkstücken verfestigt.

Zur Herstellung einzelner Werkstückschichten ist es ferner bekannt, Rohstoffpulvermaterial in Form einer Rohstoffpulverschicht auf einen Träger aufzubringen und selektiv sowie nach Maßgabe der Geometrie der aktuell herzustellenden Werkstückschicht zu bestrahlen. Die Laserstrahlung dringt in das Rohstoffpulvermaterial ein und verfestigt dieses, beispielsweise in Folge eines Erhitzens, was ein Schmelzen und/oder Sintern verursacht. Ist eine Werkstückschicht verfestigt, wird eine neue Schicht von unverarbeitetem Rohstoffpulvermaterial auf die bereits hergestellte Werkstückschicht aufgebracht. Hierzu können bekannte Beschichteranordnungen oder Pulverauftragsvorrichtungen verwendet werden. Anschließend erfolgt eine erneute Bestrahlung der nun obersten und noch unverarbeiteten Rohstoffpulverschicht. Folglich wird das Werkstück sukzessive Schicht für Schicht aufgebaut, wobei jede Schicht eine Querschnittsfläche und/oder eine Kontur des Werkstücks definiert. In diesem Zusammenhang ist es ferner bekannt, auf CAD- oder vergleichbare Werkstückdaten zurückzugreifen, um die Werkstücke im Wesentlichen automatisch herzustellen.

Bekannte Vorrichtungen zur Herstellung von dreidimensionalen Werkstücken finden sich beispielsweise in der EP 2 961 549 A1 und in der EP 2 878 402 A1. Die in diesen Dokumenten beschriebenen Vorrichtungen umfassen jeweils einen Träger, welcher Schicht für Schicht in vertikaler Richtung nach unten abgesenkt werden kann. Eine entsprechende vertikale Bewegung des Trägers findet in diesen bekannten Vorrichtungen immer dann statt, wenn eine Schicht des Rohstoffpulvers vollständig bestrahlt wurde und bevor die nächste Pulverschicht aufgetragen wird. Mit dem zunehmenden Einsatz von generativen Schichtbauverfahren in der industriellen Fertigung komplexer Bauteile wächst der Bedarf für Verfahren, die die Herstellung von Multimaterialwerkstücken ermöglichen.

Die JP 2009 001900 A beschreibt ein Verfahren zur Verarbeitung unterschiedlicher Materialien durch Lasersintern. Nach dem Bestrahlen einer Schicht aus einem ersten Pulvermaterial wird überschüssiges, nicht verfestigtes Pulvermaterial abgesaugt. Anschließend wird eine Schicht aus einem zweiten Pulvermaterial aufgetragen und ebenfalls bestrahlt und folglich verfestigt.

Die DE 101 48 967 A1 beschreibt ein Verfahren zum Herstellen eines dreidimensionalen Gegenstandes, bei dem durch Anhaften von pulverförmigem Material benachbart zu einer Bestrahlungsgrenze eine Oberflächenschicht niedriger Dichte gebildet wird.

Die JP 2017 145178 A offenbart die Herstellung einer Stützstruktur durch einen Laserstrahl.

Die Erfindung ist daher auf die Aufgabe gerichtet, ein Verfahren und eine Vorrichtung anzugeben, die die Herstellung qualitativ hochwertiger Multimaterialwerkstücke ermöglichen.

Diese Aufgabe wird durch ein Verfahren mit den Merkmalen des Patentanspruchs 1 sowie eine Vorrichtung mit den Merkmalen des Patentanspruchs 11 gelöst.

Bei einem Verfahren zur Herstellung eines dreidimensionalen Werkstücks wird ein erstes Rohstoffpulver auf einen Träger aufgetragen, um eine aus dem ersten Rohstoffpulver bestehende Rohstoffpulverschicht zu erzeugen. Die aus dem ersten Rohstoffpulver bestehende Rohstoffpulverschicht wird selektiv, insbesondere ortselektiv, mit elektromagnetischer Strahlung oder Teilchenstrahlung bestrahlt, um einen verfestigten ersten Werkstückschichtabschnitt aus dem ersten Rohstoffpulver zu erzeugen. Auf dem Träger befindet sich dann der verfestigte erste Werkstückschichtabschnitt, der von nicht verfestigtem, losem ersten Rohstoffpulver umgeben ist. Falls gewünscht oder erforderlich, können bei der selektiven Bestrahlung der aus dem ersten Rohstoffpulver bestehenden Rohstoffpulverschicht auch mehrere, separat voneinander ausgebildete erste Werkstückschichtabschnitte erzeugt werden, die beliebig verteilt auf dem Träger angeordnet und in die umgebende Schicht aus nicht verfestigtem ersten Rohstoffpulver eingebettet sein können.

Anschließend wird nicht verfestigtes erstes Rohstoffpulver von dem Träger entfernt. Insbesondere wird das nicht verfestigte erste Rohstoffpulver von einem Bereich des Trägers entfernt, der nicht von dem ersten Werkstückschichtabschnitt bedeckt ist. Beispielsweise kann das nicht verfestigte erste Rohstoffpulver abgesaugt oder anderweitig von dem Träger und gegebenenfalls auch aus einer den Träger aufnehmenden Prozesskammer entfernt werden. Auf dem Träger befindet sich dann nur noch der erste Werkstückschichtabschnitt.

Im nächsten Schritt wird nun ein zweites Rohstoffpulver auf den Träger aufgetragen, um benachbart zu dem ersten Werkstückschichtabschnitt einen aus dem zweiten Rohstoffpulver bestehenden Rohstoffpulverschichtabschnitt zu erzeugen. Mit anderen Worten, das zweite Rohstoffpulver wird zumindest auf den Bereich des Trägers aufgetragen, der nicht von dem ersten Werkstückschichtabschnitt bedeckt ist, so dass nach dem Auftragen des zweiten Rohstoffpulvers der aus dem zweiten Rohstoffpulver bestehende Rohstoffpulverschichtabschnitt den ersten Werkstückschichtabschnitt umgibt. Unter dem Begriff "benachbart" wird hier demzufolge verstanden, dass der aus dem zweiten Rohstoffpulver bestehende Rohstoffpulverschichtabschnitt und der erste Werkstückschichtabschnitt bezüglich des Trägers nebeneinander und nicht übereinander auf dem Träger angeordnet sind. Vorzugsweise sind nach dem Auftragen des Rohstoffpulverschichtabschnitts auf den Träger eine von dem Träger abgewandte Oberfläche des Rohstoffpulverschichtabschnitts und eine von dem Träger abgewandte Oberfläche des ersten Werkstückschichtabschnitts im Wesentlichen koplanar zueinander angeordnet.

Das zweite Rohstoffpulver besteht vorzugsweise aus einem Material, das sich von dem Material des/der ersten Rohstoffpulver(s) unterscheidet. Beispielsweise kann es sich bei dem ersten und dem zweiten Rohstoffpulver jeweils um Metallpulver bzw. Metalllegierungspulver handeln. Alternativ dazu ist es jedoch auch denkbar, dass das erste und/oder das zweite Rohstoffpulver aus einem keramischen Material oder einem Kunststoffmaterial besteht/bestehen.

Der aus dem zweiten Rohstoffpulver bestehende Rohstoffpulverschichtabschnitt wird nun, wie vorher die aus dem ersten Rohstoffpulver bestehende Rohstoffpulverschicht, selektiv, insbesondere ortselektiv, mit elektromagnetischer Strahlung oder Teilchenstrahlung bestrahlt, um benachbart zu dem ersten Werkstückschichtabschnitt einen verfestigten zweiten Werkstückschichtabschnitt aus dem zweiten Rohstoffpulver zu erzeugen. Unter dem Begriff "benachbart" wird hier wiederum verstanden, dass der erste Werkstückschichtabschnitt und der zweite Werkstückschichtabschnitt bezüglich des Trägers nebeneinander und nicht übereinander auf dem Träger angeordnet sind. Insbesondere sind nach dem selektiven Bestrahlen des aus dem zweiten Rohstoffpulver bestehenden Rohstoffpulverschichtabschnitts eine von dem Träger abgewandte Oberfläche des zweiten Werkstückschichtabschnitts und die von dem Träger abgewandte Oberfläche des ersten Werkstückschichtabschnitts im Wesentlichen koplanar zueinander angeordnet.

Beim Auftragen des zweiten Rohstoffpulvers auf den Träger ist es nicht ausgeschlossen, dass das zweite Rohstoffpulver zumindest in kleinen Mengen auch auf dem ersten Werkstückschichtabschnitt zu liegen kommt. Bei der selektiven Bestrahlung des aus dem zweiten Rohstoffpulver bestehenden Rohstoffpulverschichtabschnitts werden die von dem ersten Werkstückschichtabschnitt belegten Bereiche des Trägers jedoch nicht bestrahlt, so dass dieses zweite Rohstoffpulver nicht verfestigt wird und beispielsweise nach der selektiven Bestrahlung des aus dem zweiten Rohstoffpulver bestehenden Rohstoffpulverschichtabschnitts entfernt werden kann. Beispielsweise kann das Pulver manuell oder automatisch mittels einer Bürste oder durch Absaugen entfernt werden.

Eine Bestrahlungseinheit, die dazu dient, die auf den Träger aufgetragenen Rohstoffpulverschichten zu bestrahlen, kann mindestens ein optisches Element umfassen. Bei dem optischen Element kann es sich beispielsweise um eine Scan-Einheit, eine Fokussier-Einheit und/oder um eine F-Theta-Linse handeln. Ferner kann die Bestrahlungseinheit eine Strahlquelle umfassen, beispielsweise eine Elektronenstrahlquelle oder einen Laser. Die von der Bestrahlungseinheit ausgesendete Strahlung kann der Bestrahlungseinheit jedoch auch von einer Strahlquelle zugeführt werden, welche sich außerhalb der Bestrahlungseinheit befindet. Hierfür können beispielsweise Spiegel, optische Fasern und/oder andere Lichtleiter verwendet werden.

Auf dem Träger befinden sich nach der selektiven Bestrahlung des aus dem zweiten Rohstoffpulver bestehenden Rohstoffpulverschichtabschnitts der verfestigte erste Werkstückschichtabschnitt und der verfestigte zweite Werkstückschichtabschnitt, wobei der erste und der zweite verfestigte Werkstückschichtabschnitt von nicht verfestigtem, losem zweiten Rohstoffpulver umgeben sind. Falls gewünscht oder erforderlich, können bei der selektiven Bestrahlung des aus dem zweiten Rohstoffpulver bestehenden Rohstoffpulverschichtabschnitts auch mehrere, separat voneinander ausgebildete zweite Werkstückschichtabschnitte erzeugt werden, die beliebig benachbart zu dem mindestens einen ersten Werkstückschichtabschnitt verteilt auf dem Träger angeordnet und in die umgebende Schicht aus nicht verfestigtem zweiten Rohstoffpulver eingebettet sein können.

Schließlich wird bei dem Verfahren zur Herstellung eines dreidimensionalen Werkstücks das nach der ortsselektiven Bestrahlung des aus dem zweiten Rohstoffpulver bestehenden Rohstoffpulverschichtabschnitts verbleibende nicht verfestigte zweite Rohstoffpulver beheizt, um benachbart zu dem ersten Werkstückschichtabschnitt und dem zweiten Werkstückschichtabschnitt einen zusammenhängenden porösen Sinterschichtabschnitt aus dem zweiten Rohstoffpulver zu erzeugen. Unter dem Begriff "benachbart" wird hier wiederum verstanden, dass der erste Werkstückschichtabschnitt, der zweite Werkstückschichtabschnitt und der Sinterschichtabschnitt bezüglich des Trägers nebeneinander und nicht übereinander auf dem Träger angeordnet sind. Der Sinterschichtabschnitt wird folglich in einem Bereich des Trägers erzeugt, der weder von dem ersten Werkstückschichtabschnitt noch von dem zweiten Werkstückschichtabschnitt bedeckt ist. Das nicht verfestigte zweite Rohstoffpulver wird somit nicht wie das erste nicht verfestigte Rohstoffpulver von dem Träger entfernt, sondern durch die Beaufschlagung mit Temperatur zu einer zusammenhängenden Schicht formiert.

Der durch Temperatureinwirkung aus dem zweiten Rohstoffpulver erzeugte Sinterschichtabschnitt unterscheidet sich von dem durch ortsselektive Bestrahlung aus dem zweiten Rohstoffpulver erzeugten zweiten Werkstückschichtabschnitt insbesondere durch seine verringerte Materialdichte, d.h. der Sinterschichtabschnitt weist eine höhere Porosität auf als der zweite Werkstückschichtabschnitt. Andererseits enthält der Sinterschichtabschnitt jedoch im Wesentlichen keine einzelnen Pulverpartikel mehr, d.h. zumindest die überwiegende Anzahl der ursprünglich in Form einzelner Pulverkörner vorliegenden Pulverpartikel des zweiten Rohstoffpulvers sind in dem Sinterschichtabschnitt miteinander verbunden, wobei die ursprüngliche Pulverpartikelform jedoch durchaus noch erkennbar sein kann. Der Sinterschichtabschnitt und der zweite Werkstückschichtabschnitt können auf einfache Weise optisch, d.h. anhand von Mikroskopieuntersuchungen, voneinander unterschieden werden. Ferner ist eine Unterscheidung des Sinterschichtabschnitts von dem zweiten Werkstückschichtabschnitt durch Porositätsuntersuchungen möglich. Die Porositäten des Sinterschichtabschnitts und des zweiten Werkstückschichtabschnitts können beispielsweise durch Computertomographie oder durch Porositätsmessungen gemäß EN ISO 2738 bestimmt werden.

Nach Abschluss des Beheizungsschritts befinden sich auf dem Träger der verfestigte erste Werkstückschichtabschnitt, der verfestigte zweite Werkstückschichtabschnitt und der den ersten und den zweiten Werkstückschichtabschnitt umgebende Sinterschichtabschnitt. Auf diese feste "Unterlage" kann nun eine weitere aus dem ersten Rohstoffpulver bestehende Rohstoffpulverschicht aufgetragen und die obigen Schritte können so oft wiederholt werden, bis das dreidimensionale Werkstück Schicht für Schicht fertig aufgebaut ist und die gewünschte Form hat. Der Träger kann eine horizontale Oberfläche aufweisen, auf welche die Rohstoffpulver schichtweise, d.h. in horizontalen Schichten, aufgetragen werden können. Ferner kann der Träger Schicht für Schicht in vertikaler Richtung nach unten abgesenkt werden.

Auf diese Art und Weise kann ein Multimaterialwerkstück hergestellt werden, in dem aus dem ersten und dem zweiten Rohstoffpulver hergestellte Bereiche beliebig in dem Werkstück verteilt angeordnet sein können. Ferner wird bei dem Verfahren eine Vermischung der beiden Rohstoffpulver zuverlässig vermieden, da der Auftrag von losem Rohstoffpulver auf eine darunterliegende Rohstoffpulverschicht vermieden wird. Vielmehr wird jedes der beiden Rohstoffpulver stets auf eine feste "Unterlage" aufgetragen, die in der ersten Schicht durch den Träger und in den darüber liegenden Schichten durch den Sinterschichtabschnitt, den verfestigten ersten Werkstückschichtabschnitt und/oder den verfestigten zweiten Werkstückschichtabschnitt gebildet wird. Auf diese Art und Weise kann ein qualitativ hochwertiges Multimaterialwerkstück erzeugt werden.

Zum Auftragen des ersten und des zweiten Rohstoffpulvers auf den Träger kann eine Pulverauftragsvorrichtung verwendet werden. Die Pulverauftragsvorrichtung kann eine Walze, einen Schieber oder ein anderes geeignetes Bauteil umfassen, das dazu eingerichtet ist, in horizontaler Richtung über die Oberfläche des Trägers bzw. eine bereits auf dem Träger aufgebauten Schicht zu fahren, die durch den Sinterschichtabschnitt, den verfestigten ersten Werkstückschichtabschnitt und/oder den verfestigten zweiten Werkstückschichtabschnitt gebildet wird, und dabei eine neue Pulverschicht aufzutragen.

Die Pulverauftragsvorrichtung ist vorzugsweise dazu eingerichtet, sowohl das erste als auch das zweite Rohstoffpulver auf den Träger aufzubringen. Eine Pulverauftragsvorrichtung, die zum Auftragen von verschiedenen Rohstoffpulvern auf den Träger geeignet ist, kann beispielsweise separate Pulverreservoirs für das erste und das zweite Rohstoffpulver umfassen. Die Pulverreservoirs können integriert mit dem über die Oberfläche des Trägers bewegbaren Bauteil der Pulverauftragsvorrichtung ausgebildet sein und sich im Betrieb der Pulverauftragsvorrichtung ebenfalls über die Oberfläche des Trägers bewegen. Durch entsprechende Steuerung der Pulverabgabe aus den Pulverreservoirs können das erste und das zweite Rohstoffpulver dann entweder vollflächig oder ortselektiv auf den Träger aufgetragen werden.

Alternativ dazu kann die Pulverauftragsvorrichtung jedoch auch ortsfeste Pulverreservoirs umfassen, die beispielsweise benachbart zu dem Träger angeordnet sind und von denen das bewegliche Bauteil der Pulverauftragsvorrichtung Pulver entnimmt und über die Oberfläche des Trägers verteilt. Das bewegliche Teil der Pulverauftragsvorrichtung kann beispielsweise eine Düse umfassen, die über den Träger bewegbar ist, um das erste und das zweite Rohstoffpulver ortselektiv auf den Träger aufzutragen.

Falls gewünscht, können bei dem Verfahren zur Herstellung eines dreidimensionalen Werkstücks die oben beschriebenen Schritte des Erzeugens mindestens eines ersten Werkstückschichtabschnitts durch Auftragen eines ersten Rohstoffpulvers auf den Träger und anschließendes selektives Bestrahlen mit elektromagnetischer Strahlung oder Teilchenstrahlung sowie des anschließenden Entfernens des nicht verfestigten ersten Rohstoffpulvers von dem Träger wiederholt ausgeführt werden. Dabei können auch verschiedene erste Rohstoffpulver zum Einsatz können. Auf diese Art und Weise können mehrere erste Werkstückschichtabschnitte, die aus dem gleichen Material oder aus unterschiedlichen Materialien bestehen können, auf dem Träger erzeugt werden, bevor im nächsten Schritt das zweite Rohstoffpulver auf den Träger, d. h. auf die nicht von den ersten Werkstückschichtabschnitten bedeckten Bereiche des Trägers aufgetragen wird.

Zusätzlich oder alternativ dazu können bei dem Verfahren zur Herstellung eines dreidimensionalen Werkstücks die oben beschriebenen Schritte des Erzeugens eines zweiten Werkstückschichtabschnitts durch Auftragen eines zweiten Rohstoffpulvers auf den Träger und anschließendes selektives Bestrahlen des zweiten Rohstoffpulvers mit elektromagnetischer Strahlung oder Teilchenstrahlung vor der Beheizung von nicht verfestigtem zweiten Rohstoffpulver wiederholt ausgeführt werden. Der zusammenhängende poröse Sinterschichtabschnitt kann dann als "Block" aus mehreren übereinander angeordneten Rohstoffpulverschichtabschnitten erzeugt werden. Dadurch kann der Zeitbedarf für die Erzeugung des porösen Sinterschichtabschnitts minimiert werden.

Ferner kann lediglich ein Teil des nicht verfestigten zweiten Rohstoffpulvers beheizt werden, um benachbart zu dem ersten Werkstückschichtabschnitt und dem zweiten Werkstückschichtabschnitt einen zusammenhängenden porösen Sinterschichtabschnitt aus dem zweiten Rohstoffpulver zu erzeugen. Beispielsweise kann darauf verzichtet werden, Bereiche des nicht verfestigten zweiten Rohstoffpulvers zu Beheizen und folglich zu sintern, die nach Fertigstellung des Bauteils in einer umschließenden Struktur aufgenommen sind. Dadurch kann sichergestellt werden, dass der poröse Sinterschichtabschnitt nach Fertigstellung des Bauteils vollständig entfernt werden kann.

Das Material des zweiten Rohstoffpulvers weist vorzugsweise eine geringere Schmelztemperatur und/oder eine höhere Wärmeleitfähigkeit auf als das Material des ersten Rohstoffpulvers. Die Auswahl des Materials mit der geringeren Schmelztemperatur und/oder der höheren Wärmeleitfähigkeit zur Erzeugung des Sinterschichtabschnitts ermöglicht es, die zur Erzeugung des Sinterschichtabschnitts erforderliche Energie und/oder Zeit zu minimieren. Zusätzlich oder alternativ dazu kann das Material des zweiten Rohstoffpulvers kostengünstiger sein als das Material des ersten Rohstoffpulvers. Dadurch können die Materialkosten für die Erzeugung des Sinterschichtabschnitts minimiert werden.

Vorzugsweise wird das nicht verfestigte zweite Rohstoffpulver zur Erzeugung des Sinterschichtabschnitts auf eine Temperatur aufgeheizt, die unterhalb der Schmelztemperatur des Materials des zweiten Rohstoffpulvers liegt. Dadurch wird sichergestellt, dass kein Flüssigphasensintern des nicht verfestigten zweiten Rohstoffpulvers stattfindet, sondern vielmehr lediglich ein diffusionsgesteuerter Festphasensinterprozess erfolgt. Ein Ausschmelzen des zweiten Rohstoffpulvers während der Beheizung zur Erzeugung des Sinterschichtabschnitts wird somit sicher vermieden.

Die zur Beheizung des nicht verfestigten Rohstoffpulvers zur Erzeugung eines zusammenhängenden Sinterschichtabschnitts benötigte Zeit variiert in Abhängigkeit der Materialeigenschaften des zweiten Rohstoffpulvers und in Abhängigkeit der Geometrie des herzustellenden Werkstücks. Die Zeitspanne zur Beheizung des nicht verfestigten Rohstoffpulvers sollte einerseits lang genug sein, um aus dem nicht verfestigten zweiten Rohstoffpulver durch einen diffusionsgesteuerten Festphasensinterprozess einen zusammenhängenden Sinterschichtabschnitt zu erzeugen, der im Wesentlichen keine Einzelpulverpartikel mehr enthält. Dadurch wird eine Verunreinigung des ersten Rohstoffpulvers beim Auftragen der nächsten Schicht auf den Sinterschichtabschnitt durch Partikel des zweiten Rohstoffpulvers sicher verhindert. Andererseits sollte die Zeitspanne aber so kurz wie möglich sein, um den zur Erzeugung des Sinterschichtabschnitts erforderlichen Zeitaufwand zu minimieren und den Sinterschichtabschnitt überdies mit der gewünschten Porosität zu erzeugen.

Auch der zur Erzeugung eines zusammenhängenden Sinterschichtabschnitts benötigte Energieeintrag variiert in Abhängigkeit der Materialeigenschaften des zweiten Rohstoffpulvers und in Abhängigkeit der Geometrie des herzustellenden Werkstücks. Bei der Verarbeitung von Stahlpulver beträgt der Energieeintrag, der zur Erzeugung eines Stahl-Sinterschichtabschnitts erforderlich ist, beispielsweise ca. 50% des Energieeintrags, der zum Schmelzen von Stahlpulver erforderlich ist.

Der Sinterschichtabschnitt kann eine durch Computertomographie oder durch Porositätsmessungen gemäß EN ISO 2738 bestimmbare Porosität von 10 bis 20 %, insbesondere eine durch Computertomographie oder durch Porositätsmessungen gemäß EN ISO 2738 bestimmbare Porosität von 10 bis 15 % aufweisen. Der Sinterschichtabschnitt ist dann einerseits mit vertretbarem Zeit- und Energieaufwand erzeugbar. Andererseits sind die Einzelpulverpartikel in dem Sinterschichtabschnitt dann bereits derart miteinander verbunden, dass der Sinterschichtabschnitt, wie gewünscht, im Wesentlichen frei von Einzelpulverpartikeln ist. Im Gegensatz dazu kann der zweite Werkstückschichtabschnitt eine durch Computertomographie oder durch Porositätsmessungen gemäß EN ISO 2738 bestimmbare Porosität von lediglich 0 bis 5 %, insbesondere eine durch Computertomographie oder durch Porositätsmessungen gemäß EN ISO 2738 bestimmbare Porosität von 0 bis 2% aufweisen, sodass sich der aus dem zweiten Rohstoffpulver erzeugte zweite Werkstückschichtabschnitt sowohl optisch als auch durch seine Materialeigenschaften, wie zum Beispiel seine mechanischen oder elektrischen Eigenschaften deutlich von dem Sinterschichtabschnitt unterscheidet.

Der Sinterschichtabschnitt enthält vorzugsweise im Bereich ihrer Oberflächen miteinander verbundene Pulverkörner, deren Form und Größe im Wesentlichen der Form und Größe der Pulverkörner des zweiten Rohstoffpulvers entsprechen. Mit anderen Worten, der Festphasensinterprozess zur Erzeugung des Sinterschichtabschnitts wird vorzugsweise so gesteuert, dass die Form und Größe der Pulverkörner des zweiten Rohstoffpulvers im Wesentlichen erhalten bleibt und lediglich an Kontaktpunkten zwischen zueinander benachbarten Pulverkörnern Materialbrücken bzw. sogenannte Sinterhälse entstehen.

Grundsätzlich ist es denkbar, das nicht verfestigte zweite Rohstoffpulver durch eine Bestrahlung mit elektromagnetischer Strahlung oder Teilchenstrahlung zu beheizen. Vorzugsweise wird das nicht verfestigte zweite Rohstoffpulver jedoch mittels einer Heizeinrichtung beheizt, die separat von einer Bestrahlungseinrichtung zur selektiven Bestrahlung einer auf den Träger aufgebrachten Rohstoffpulverschicht mit elektromagnetischer Strahlung oder Teilchenstrahlung ausgebildet ist. Die Heizeinrichtung, die beispielsweise eine Laserdiodenanordnung oder einen Heizstrahler umfassen kann, kann dem nicht verfestigten zweiten Rohstoffpulver Wärmeenergie über eine von dem Träger abgewandte Oberfläche des nicht verfestigten zweiten Rohstoffpulvers zuführen. Zusätzlich oder alternativ dazu kann die Heizeinrichtung dem nicht verfestigten zweiten Rohstoffpulver aber auch über eine dem Träger zugewandte Oberfläche des nicht verfestigten Rohstoffpulvers Wärmeenergie zu führen. Die Wärmeenergiezufuhr kann durch Wärmestrahlung und/oder Wärmeleitung erfolgen.

Beispielsweise kann die Heizeinrichtung ein erstes Heizelement umfassen, das oberhalb des Trägers in einer den Träger aufnehmenden Prozesskammer angeordnet ist. Ein derartiges Heizelement kann beispielsweise Wärmeenergie in Form von Wärmestrahlung an die von dem Träger abgewandte Oberfläche des nicht verfestigten zweiten Rohstoffpulvers abgeben. Zusätzlich oder alternativ dazu kann die Heizeinrichtung ein zweites Heizelement umfassen, das insbesondere dazu dient, Wärmeenergie an die dem Träger zugewandte Oberfläche des nicht verfestigten zweiten Rohstoffpulvers abzugeben. Das zweite Heizelement kann beispielsweise in den Träger integriert oder unterhalb des Trägers außerhalb der den Träger aufnehmenden Prozesskammer angeordnet sein. Das zweite Heizelement kann dann den Träger beheizen, der seinerseits die Wärmeenergie an das nicht verfestigte zweite Rohstoffpulver weiterleitet.

Das von dem Träger entfernte nicht verfestigte erste Rohstoffpulver wird vorzugsweise zur Herstellung eines dreidimensionalen Werkstücks wiederverwendet. Da bei dem hier beschriebenen Verfahren eine Vermischung des ersten und des zweiten Rohstoffpulvers weitestgehend vermieden wird, kann der Aufwand für eine Trennung der beiden Rohstoffpulver vor der Wiederverwendung der Rohstoffpulver verringert werden. Beispielsweise kann das von dem Träger entfernte nicht verfestigte Rohstoffpulver unmittelbar einem Pulverkreislauf zugeführt und über den Pulverkreislauf in die Prozesskammer zurückgeführt und zum Aufbau weiterer Schichten des dreidimensionalen Werkstücks verwendet werden. Alternativ oder zusätzlich dazu kann das zurückgewonnene nicht verfestigte erste Rohstoffpulver aber auch erst in einem zukünftigen Bauprozess zur Herstellung eines weiteren dreidimensionalen Werkstücks eingesetzt werden. Vor seiner Wiederverwendung zur Herstellung eines dreidimensionalen Werkstücks kann das erste Rohstoffpulver einen Pulveraufbereitungsprozess durchlaufen und beispielsweise klassiert, insbesondere gesiebt werden.

Der Sinterschichtabschnitt wird vorzugsweise nach Beendigung des Herstellprozesses zur Erzeugung eines dreidimensionalen Werkstücks durch einen Trennprozess von dem fertigen dreidimensionalen Werkstück getrennt. Beispielsweise kann der Sinterschichtabschnitt durch ein spanendes Verfahren von dem fertigen dreidimensionalen Werkstück getrennt werden. In einer besonders bevorzugten Ausführungsform umfasst der Trennprozess zur Trennung des Sinterschichtabschnitts von dem fertigen dreidimensionalen Werkstück einen Vereinzelungsprozess, durch den die in dem Sinterschichtabschnitt enthaltenen, miteinander verbundenen Pulverkörner wieder voneinander getrennt werden. Dies ist insbesondere dann sinnvoll, wenn der Festphasensinterprozess zur Erzeugung des Sinterschichtabschnitts, wie oben beschrieben, so gesteuert wird, dass die Form und Größe der Pulverkörner des zweiten Rohstoffpulvers im Wesentlichen erhalten bleibt und der Sinterschichtabschnitt lediglich an ihren Kontaktpunkten miteinander verbundene einzelne Pulverkörner des zweiten Rohstoffpulvers enthält. Ein Trennprozess, der auch eine Vereinzelung der in dem Sinterschichtabschnitt enthaltenen Pulverkörner bewirkt, ist beispielsweise ein Strahlprozess.

Die in dem Vereinzelungsprozess erzeugten einzelnen Pulverkörner des Sinterschichtabschnitts können zur Herstellung eines dreidimensionalen Werkstücks in einem zukünftigen Bauprozess wiederverwendet werden. Vor ihrer Wiederverwendung zur Herstellung eines dreidimensionalen Werkstücks können die in dem Vereinzelungsprozess erzeugten einzelnen Pulverkörner des Sinterschichtabschnitts einen Pulveraufbereitungsprozess durchlaufen und beispielsweise klassiert, insbesondere gesiebt werden.

Eine Vorrichtung zur Herstellung eines dreidimensionalen Werkstücks umfasst eine Pulverauftragsvorrichtung, die dazu eingerichtet ist, ein erstes und ein zweites Rohstoffpulver auf einen Träger aufzutragen. Ferner umfasst die Vorrichtung eine Bestrahlungseinrichtung, die dazu eingerichtet ist, eine auf den Träger aufgetragene Rohstoffpulverschicht selektiv mit elektromagnetischer Strahlung oder Teilchenstrahlung zu bestrahlen. Eine Entfernungseinrichtung der Vorrichtung ist dazu eingerichtet, nicht verfestigtes erstes Rohstoffpulver von dem Träger zu entfernen. Die Entfernungseinrichtung kann beispielsweise einen flexiblen Schlauch umfassen, der mit einer Pulverfördereinrichtung verbunden und manuell oder automatisch relativ zu dem Träger bewegbar ist. Darüber hinaus umfasst die Vorrichtung eine Heizeinrichtung, die dazu eingerichtet ist, eine auf den Träger aufgetragene Rohstoffpulverschicht zu beheizen. Grundsätzlich kann die Heizeinrichtung zur Beheizung der auf den Träger aufgetragenen Rohstoffpulverschicht durch die Bestrahlungseinrichtung zur selektiven Bestrahlung der auf den Träger aufgebrachten Rohstoffpulverschicht mit elektromagnetischer Strahlung oder Teilchenstrahlung gebildet werden. Vorzugsweise ist die Heizeinrichtung jedoch separat von der Bestrahlungseinrichtung zur selektiven Bestrahlung der auf den Träger aufgebrachten Rohstoffpulverschicht mit elektromagnetischer Strahlung oder Teilchenstrahlung ausgebildet. Beispielsweise kann die Heizeinrichtung eine Laserdiodenanordnung oder einen Heizstrahler umfassen. Eine Steuereinheit, die beispielsweise in Form einer elektronischen Steuereinheit ausgebildet sein kann, ist dazu eingerichtet, den Betrieb der Vorrichtung und insbesondere den Betrieb der Pulverauftragsvorrichtung, der Bestrahlungseinrichtung, der Heizeinrichtung und gegebenenfalls auch der Entfernungseinrichtung zu steuern. Insbesondere ist die Steuereinheit dazu eingerichtet, den Betrieb der Vorrichtung derart zu steuern, dass mittels der Pulverauftragsvorrichtung das erste Rohstoffpulver auf den Träger aufgetragen wird, um eine aus dem ersten Rohstoffpulver bestehende Rohstoffpulverschicht zu erzeugen, mittels der Bestrahlungseinrichtung die aus dem ersten Rohstoffpulver bestehende Rohstoffpulverschicht selektiv mit elektromagnetischer Strahlung oder Teilchenstrahlung bestrahlt wird, um einen verfestigten ersten Werkstückschichtabschnitt aus dem ersten Rohstoffpulver zu erzeugen, mittels der Entfernungseinrichtung nicht verfestigtes erstes Rohstoffpulver von dem Träger entfernt wird, mittels der Pulverauftragsvorrichtung das zweite Rohstoffpulver auf den Träger aufgetragen wird, um benachbart zu dem ersten Werkstückschichtabschnitt einen aus dem zweiten Rohstoffpulver bestehenden Rohstoffpulverschichtabschnitt zu erzeugen, mittels der Bestrahlungseinrichtung der aus dem zweiten Rohstoffpulver bestehende Rohstoffpulverschichtabschnitt mit elektromagnetischer Strahlung oder Teilchenstrahlung bestrahlt wird, um benachbart zu dem ersten Werkstückschichtabschnitt einen verfestigten zweiten Werkstückschichtabschnitt aus dem zweiten Rohstoffpulver zu erzeugen, und mittels der Heizeinrichtung nach der ortsselektiven Bestrahlung des aus dem zweiten Rohstoffpulver bestehenden Rohstoffpulverschichtabschnitts verbleibendes nicht verfestigtes zweites Rohstoffpulver beheizt wird, um benachbart zu dem ersten Werkstückschichtabschnitt und dem zweiten Werkstückschichtabschnitt einen zusammenhängenden porösen Sinterschichtabschnitt aus dem zweiten Rohstoffpulver zu erzeugen.

Die Steuereinheit ist vorzugsweise ferner dazu eingerichtet, den Betrieb der Vorrichtung derart zu steuern, dass vor dem Auftragen des zweiten Rohstoffpulvers auf den Träger die Schritte des Auftragens des ersten Rohstoffpulvers auf den Träger, des Bestrahlens des ersten Rohstoffpulvers und des Entfernens von nicht verfestigte dem ersten Rohstoffpulver von dem Träger mehrfach ausgeführt werden. Bei jeder Wiederholung dieser Schritte kann ein anderes erstes Rohstoffpulver zum Einsatz kommen.

Zusätzlich oder alternativ dazu kann die Steuereinheit dazu eingerichtet sein, den Betrieb der Vorrichtung derart zu steuern, dass die Schritte des Erzeugens eines zweiten Werkstückschichtabschnitts durch Auftragen eines zweiten Rohstoffpulvers auf den Träger und anschließendes selektives Bestrahlen mit elektromagnetischer Strahlung oder Teilchenstrahlung vor der Beheizung von nicht verfestigtem zweiten Rohstoffpulver wiederholt ausgeführt werden.

Zusätzlich oder alternativ dazu kann die Steuereinheit dazu eingerichtet sein, den Betrieb der Vorrichtung derart zu steuern, dass lediglich ein Teil des nicht verfestigten zweiten Rohstoffpulvers beheizt wird, um benachbart zu dem ersten Werkstückschichtabschnitt und dem zweiten Werkstückschichtabschnitt einen zusammenhängenden porösen Sinterschichtabschnitt aus dem zweiten Rohstoffpulver zu erzeugen.

Ferner kann die Steuereinheit dazu eingerichtet sein, die Heizeinrichtung derart zu steuern, dass das nicht verfestigte zweite Rohstoffpulver zur Erzeugung des Sinterschichtabschnitts auf eine Temperatur aufgeheizt wird, die unterhalb der Schmelztemperatur des Materials des zweiten Rohstoffpulvers liegt. Zusätzlich oder alternativ dazu kann die Steuereinheit dazu eingerichtet sein, die Heizeinrichtung derart zu steuern, dass das nicht verfestigte zweite Rohstoffpulver zur Erzeugung des Sinterschichtabschnitts für eine gewünschte Zeitspanne beheizt wird. Zusätzlich oder alternativ dazu kann die Steuereinheit dazu eingerichtet sein, die Heizeinrichtung derart zu steuern, dass das nicht verfestigte zweite Rohstoffpulver zur Erzeugung des Sinterschichtabschnitts durch einen Energieeintrag aufgeheizt wird, der geringer ist als ein Schmelzenergieeintrag, der eine Aufheizung des Materials des zweiten Rohstoffpulvers auf seine Schmelztemperatur bewirken würde.

Die Heizeinrichtung kann dazu eingerichtet sein, dem nicht verfestigten zweiten Rohstoffpulver Wärmeenergie über eine von dem Träger abgewandte Oberfläche des nicht verfestigten zweiten Rohstoffpulvers und/oder eine dem Träger zugewandte Oberfläche des nicht verfestigten zweiten Rohstoffpulvers zuzuführen.

Beispielsweise kann die Heizeinrichtung ein erstes Heizelement umfassen, das oberhalb des Trägers in einer den Träger aufnehmenden Prozesskammer angeordnet ist. Zusätzlich oder alternativ dazu kann die Heizeinrichtung ein zweites Heizelement umfassen, das in den Träger integriert oder unterhalb des Trägers außerhalb der den Träger aufnehmenden Prozesskammer angeordnet ist.

Die Vorrichtung umfasst vorzugsweise ferner eine Trenneinrichtung, die dazu eingerichtet ist, den Sinterschichtabschnitt nach Beendigung des Herstellprozesses zur Erzeugung eines dreidimensionalen Werkstücks von dem fertigen dreidimensionalen Werkstück zu trennen. Die Trenneinrichtung ist insbesondere dazu eingerichtet, den Sinterschichtabschnitt in einzelne Pulverkörner zu vereinzeln und kann beispielsweise in Form einer Strahlvorrichtung ausgeführt sein.

Die Erfindung wird im Folgenden anhand der beigefügten schematischen Figuren näher erläutert. Es stellen dar:
- Figur 1: eine schematische Ansicht einer Vorrichtung zur Herstellung eines dreidimensionalen Werkstücks nach dem Auftragen eines ersten Rohstoffpulvers auf einen Träger und dem Erzeugen eines verfestigten ersten Werkstückschichtabschnitts aus dem ersten Rohstoffpulver zeigt;
- Figur 2: eine schematische Ansicht der Vorrichtung gemäß Figur 1 nach dem Entfernen von nicht verfestigtem ersten Rohstoffpulver von dem Träger, dem anschließenden Auftragen eines zweiten Rohstoffpulvers auf den Träger und dem Erzeugen eines verfestigten zweiten Werkstückschichtabschnitts aus dem zweiten Rohstoffpulver benachbart zu dem ersten Werkstückschichtabschnitt zeigt;
- Figur 3: eine schematische Ansicht der Vorrichtung gemäß Figur 2 nach dem Erzeugen eines Sinterschichtabschnitts aus nicht verfestigtem zweiten Rohstoffpulver zeigt;
- Figur 4: eine schematische Ansicht der Vorrichtung gemäß Figur 3 nach dem Auftragen einer weiteren Schicht aus erstem Rohstoffpulver und dem Erzeugen eines weiteren verfestigten ersten Werkstückschichtabschnitts aus dem ersten Rohstoffpulver auf dem ersten Werkstückschichtabschnitt, dem zweiten Werkstückschichtabschnitt und dem Sinterschichtabschnitt zeigt;
- Figur 5: ein mittels der Vorrichtung gemäß der Figuren 1 bis 4 erzeugtes dreidimensionales Werkstück mit dem damit verbundenen Sinterschichtabschnitt nach der Entnahme aus der Vorrichtung gemäß der Figuren 1 bis 4 zeigt;
- Figur 6: das dreidimensionale Werkstück gemäß Figur 5 nach der Trennung von dem Sinterschichtabschnitt zeigt;
- Figur 7: eine mikroskopische Aufnahme der Oberfläche eines Sinterschichtabschnitts zeigt; und
- Figur 8: eine mikroskopische Aufnahme der Oberfläche eines zweiten Werkstückschichtabschnitts zeigt.

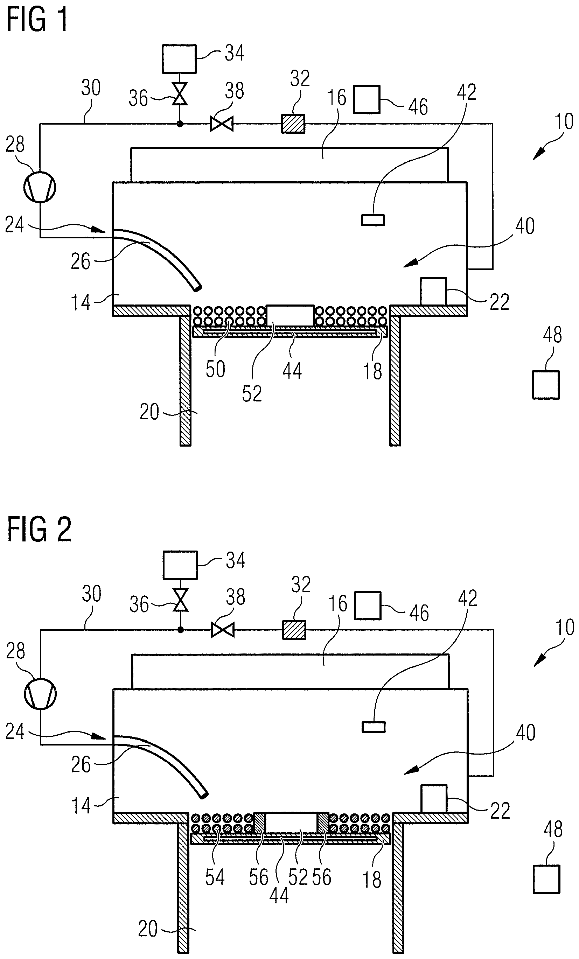

In den Figuren 1 bis 4 ist jeweils eine Vorrichtung 10 zur Herstellung eines dreidimensionalen Werkstücks 12 gezeigt. Die Vorrichtung 10 umfasst eine Prozesskammer 14 sowie eine oberhalb der Prozesskammer 14 angeordnete Bestrahlungseinrichtung 16. Die Prozesskammer 14 ist gegenüber der Umgebungsatmosphäre abgedichtet, so dass in der Prozesskammer 14 bei Bedarf eine Inert- oder Reaktionsgasatmosphäre oder ein gegenüber dem Atmosphärendruck verringerter Druck eingestellt werden kann. In der Prozesskammer 14 ist ein Träger 18 angeordnet, der dazu dient, Rohstoffpulver sowie das durch ein generatives Schichtbauverfahren aus dem Rohstoffpulver hergestelltes Werkstück 12 aufzunehmen. Der Träger 18 ist relativ zu der Prozesskammer 14 in vertikaler Richtung nach unten in eine Baukammer 20 verschiebbar.

Die Bestrahlungseinrichtung 16 der Vorrichtung 10 umfasst eine Strahlquelle, vorzugsweise eine Laserquelle, die beispielsweise Licht bei einer Wellenlänge von ungefähr 1064 nm emittiert. Alternativ dazu kann sich die Strahlquelle (beispielsweise ein Laser) auch außerhalb der Bestrahlungseinrichtung 16 befinden und ein über das Rohstoffpulver zu führender Strahl kann der Bestrahlungseinrichtung 16 beispielsweise mithilfe einer optischen Faser zugeführt werden. Die Bestrahlungseinrichtung 16 weist ferner optische Elemente, wie beispielsweise eine Scan-Einheit, eine Fokussier-Einheit und eine F-Theta-Linse auf. Die Scan-Einheit ist dazu eingerichtet, den Strahl über die oberste Rohstoffpulverschicht innerhalb einer horizontalen Ebene (in x-Richtung und y-Richtung) zu scannen. Die Fokussier-Einheit ist dazu eingerichtet, eine Fokus-Position des Strahls (in z-Richtung) zu verändern bzw. anzupassen, sodass sich eine Fokalebene der Bestrahlungseinrichtung 16 im Bereich der obersten Rohstoffpulverschicht befindet, welche von der Bestrahlungseinrichtung 16 bestrahlt wird. Falls gewünscht, kann die Bestrahlungseinrichtung 16 auch mehrere Scan-Einheiten und ggf. auch mehrere Strahlungsquellen umfassen.

Ferner umfasst die Vorrichtung 10 eine Pulverauftragsvorrichtung 22, die dazu dient, das zur Herstellung des Werkstücks 12 vorgesehene Rohstoffpulver schichtweise auf die Oberfläche des Trägers 18 aufzubringen. Die Pulverauftragsvorrichtung 22 ist dazu eingerichtet, verschiedene Rohstoffpulver auf den Träger 18 aufzutragen.

In einer Ausführungsform umfasst die Pulverauftragsvorrichtung 22 einen Schieber, der sich im Betrieb der Pulverauftragsvorrichtung 22 in horizontaler Richtung über die Oberfläche des Trägers 18 bewegt und der mehrere Pulverreservoirs zur Aufnahme der auf den Träger 18 aufzubringenden Rohstoffpulver aufweist. Durch entsprechende Steuerung der Pulverabgabe aus den Pulverreservoirs können die Rohstoffpulver dann, je nach Bedarf, entweder vollflächig oder ortselektiv auf den Träger 18 aufgetragen werden. In einer alternativen Ausführungsform umfasst die Pulverauftragsvorrichtung 22 ortsfeste Pulverreservoirs, die beispielsweise benachbart zu dem Träger 18 angeordnet sind und von denen der Schieber der Pulverauftragsvorrichtung 22 Pulver entnimmt und über die Oberfläche des Trägers 18 verteilt. Der Schieber umfasst dann beispielsweise eine Düse, die über den Träger 18 bewegbar ist, um die Rohstoffpulver bei Bedarf ortselektiv auf den Träger aufzutragen.

Die Vorrichtung 10 ist ferner mit einer Entfernungseinrichtung 24 ausgestattet, die es ermöglicht, Rohstoffpulver von dem Träger 18 zu entfernen. Die Entfernungseinrichtung 24 umfasst in der in den Figuren veranschaulichten beispielhaften Ausführungsform einen flexiblen Schlauch 26, der entweder manuell, beispielsweise mithilfe von Eingriffhandschuhen oder automatisch innerhalb der Prozesskammer 14 bewegbar ist. Ferner umfasst die Entfernungseinrichtung 24 eine hier beispielhaft in Form einer Saugpumpe ausgebildete und mit dem flexiblen Schlauch 26 verbundene Pulverfördereinrichtung 28. Im Betrieb der Entfernungseinrichtung 24 kann der Schlauch 26 über den Träger 18 bewegt werden. Gleichzeitig wird die Pulverfördereinrichtung 28 betrieben, so dass Rohstoffpulver von dem Träger 28 abgesaugt werden kann.

Die Pulverfördereinrichtung 28 ist mit einem Pulverkreislauf 30 verbunden, über den mittels der Entfernungseinrichtung 24 von dem Träger 18 und aus der Prozesskammer 14 entferntes Pulver in die Prozesskammer 14, d.h. ein entsprechendes Pulverreservoir der Pulverauftragsvorrichtung 22 zurückgeführt werden kann. In den Pulverkreislauf 30 ist eine Pulveraufbereitungsanlage 32 vorgesehen, die dazu dient, mittels der Entfernungseinrichtung 24 von dem Träger 18 entferntes Pulver vor seiner Rückführung in die Prozesskammer 14 aufzubereiten. Die Pulveraufbereitungsanlage 32 kann beispielsweise eine Siebanlage umfassen, mittels derer das Rohstoffpulver gereinigt und klassiert werden kann. Ferner ist der Pulverkreislauf 30 mit einem Speicherbehälter 34 verbunden. In dem Speicherbehälter 34 kann Rohstoffpulver, das mittels der Entfernungseinrichtung 24 von dem Träger 18 entfernt worden ist, aber nicht unmittelbar in die Prozesskammer 14 zurückgeführt werden soll, aufgenommen werden. Die Zufuhr des Rohstoffpulvers aus dem Pulverkreislauf 30 in die Prozesskammer 14 bzw. den Speicherbehälter 34 wird mittels entsprechender Steuerventile 36, 38 gesteuert.

Die Vorrichtung 10 ist ferner mit einer Heizeinrichtung 40 ausgestattet. In der hier gezeigten bevorzugten Ausführungsform der Vorrichtung 10 ist die Heizeinrichtung 40 separat von der Bestrahlungseinrichtung 16 ausgebildet. Die Heizeinrichtung 40 kann jedoch auch durch die Bestrahlungseinrichtung 16 gebildet werden. Die Heizeinrichtung 40 ist dazu eingerichtet, auf den Träger 18 aufgetragenes Rohstoffpulver zu beheizen. Bei dem in den Figuren 1 bis 4 gezeigten Ausführungsbeispiel einer Vorrichtung 10 umfasst die Heizeinrichtung 40 ein erstes Heizelement 42, das oberhalb des Trägers 18 in der Prozesskammer 14 angeordnet ist. Ferner umfasst die Heizeinrichtung 10 ein in den Träger 18 integriertes zweites Heizelement 44. In einer alternativen Ausführungsform kann das zweite Heizelement 44 jedoch auch unterhalb des Trägers 18 in der Baukammer 20 der Vorrichtung 10 angeordnet sein. Wesentlich ist lediglich, dass mittels des zweiten Heizelements 44 der Träger 18 und folglich auf den Träger 18 aufgetragenes Rohstoffpulver beheizt werden kann.

Eine hier in Form einer elektronischen Steuereinheit ausgebildete Steuereinheit 46 dient der Steuerung des Betriebs der Vorrichtung 10. Insbesondere ist die Steuereinheit 46 dazu eingerichtet, den Betrieb der Pulverauftragsvorrichtung 22, den Betrieb der Bestrahlungseinrichtung 16 und den Betrieb der Heizeinrichtung 40 automatisch zu steuern. Falls die Entfernungseinrichtung 24 zum automatischen Betrieb geeignet ist, wird auch der Betrieb der Entfernungseinrichtung 24 durch die Steuereinheit 46 gesteuert.

Schließlich umfasst die Vorrichtung 10 eine Trenneinrichtung 48, die separat von der Prozesskammer 14 und der Baukammer 20 ausgebildet ist. In der in den Figuren gezeigten Ausführungsform ist die Trenneinrichtung 48 in Form einer Strahleinrichtung ausgebildet.

Im Folgenden wird ein Verfahren zur Herstellung des dreidimensionalen Werkstücks 12 mithilfe der in den Figuren 1 bis 4 veranschaulichten Vorrichtung 10 erläutert. Bei dem hier beschriebenen Verfahren wird zunächst mittels der Pulverauftragsvorrichtung 22 unter der Steuerung der Steuereinheit 46 ein erstes Rohstoffpulver 50 auf den Träger 18 aufgetragen, so dass eine aus dem ersten Rohstoffpulver 50 bestehende Rohstoffpulverschicht auf dem Träger 18 erzeugt wird. Diese Rohstoffpulverschicht wird mittels der Bestrahlungseinrichtung 16, wiederum unter der Steuerung der Steuereinheit 46, ortselektiv mit Laserstrahlung beaufschlagt. Der Energieeintrag der Laserstrahlung sorgt für ein lokales Aufschmelzen und/oder Sintern des ersten Rohstoffpulvers 50 und folglich eine ortsselektive Verfestigung der aus dem ersten Rohstoffpulver 50 bestehenden Rohstoffpulverschicht. Dabei wird ein verfestigter erster Werkstückschichtabschnitt 52 aus dem ersten Rohstoffpulver 50 erzeugt, siehe Figur 1.

Nach Beendigung der Bestrahlung der aus dem ersten Rohstoffpulver 50 bestehenden Rohstoffpulverschicht ist auf dem Träger 18 folglich der erste Werkstückschichtabschnitt 52 angeordnet. In den Figuren ist lediglich ein erster Werkstückschichtabschnitt 52 veranschaulicht. Je nach Geometrie des herzustellenden dreidimensionalen Werkstücks 12 können aus der aus dem ersten Rohstoffpulver 50 bestehenden Rohstoffpulverschicht aber auch mehrere erste Werkstückschichtabschnitte 52 erzeugt werden, die dann benachbart zueinander auf dem Träger 18 angeordnet sind. Ferner befindet sich auf dem Träger 18 in den Bereichen der aus dem ersten Rohstoffpulver 50 bestehenden Rohstoffpulverschicht, die nicht mit Laserstrahlung beaufschlagt wurden, auch noch nicht verfestigtes erstes Rohstoffpulver 50.

Das nicht verfestigte erste Rohstoffpulver 50 wird anschließend mittels der Entfernungseinrichtung 24 von dem Träger 18 entfernt. Hierzu wird der flexible Schlauch 26 manuell oder automatisch über den Träger 18 geführt. Gleichzeitig wird die Pulverfördereinrichtung 28 betrieben, so dass das nicht verfestigte erste Rohstoffpulver 50 von dem Träger 18 gesaugt wird. Das mithilfe der Entfernungseinrichtung 24 aus der Prozesskammer 14 abgesaugte erste Rohstoffpulver 50 wird in der Pulveraufbereitungsanlage 32 aufbereitet und anschließend durch eine entsprechende Steuerung der Steuerventile 36, 38 entweder in den Speicherbehälter 34 geleitet oder über den Pulverkreislauf 30 die Prozesskammer 14 zurückgeführt. Wenn das erste Rohstoffpulver 50 in den Speicherbehälter 34 geleitet wird, kann zu einem späteren Zeitpunkt zur Herstellung eines weiteren dreidimensionalen Werkstücks 12 genutzt werden. Im Gegensatz dazu wird in die Prozesskammer zurückgeführtes erstes Rohstoffpulver 50 unmittelbar in dem aktuellen Bauprozess zur Herstellung des dreidimensionalen Werkstücks 12 wiederverwendet.

In den Figuren ist die Verarbeitung lediglich eines ersten Rohstoffpulvers 50 veranschaulicht. Falls gewünscht, können jedoch die oben beschriebenen Schritte des Erzeugens eines ersten Werkstückschichtabschnitts 52 durch Auftragen eines ersten Rohstoffpulvers 50 auf den Träger 18 und anschließendes selektives Bestrahlen mit elektromagnetischer Strahlung oder Teilchenstrahlung sowie des anschließenden Entfernens des nicht verfestigten ersten Rohstoffpulvers 50 von dem Träger 18 wiederholt ausgeführt werden. Dabei können auch verschiedene erste Rohstoffpulver 50 zum Einsatz können. Auf diese Art und Weise können mehrere erste Werkstückschichtabschnitte 52, die aus dem gleichen Material oder aus unterschiedlichen Materialien bestehen können, auf dem Träger 18 erzeugt werden. Diese ersten Werkstückschichtabschnitte 52 sind dann benachbart zueinander auf dem Träger 18 angeordnet.

Nach der Entfernung des nicht verfestigten ersten Rohstoffpulvers 50 von dem Träger 18 wird unter der Steuerung der Steuereinheit 46 mittels der Pulverauftragsvorrichtung 22 ein zweites Rohstoffpulver 54 auf den Träger 18 aufgetragen. Dabei erfolgt der Auftrag des zweiten Rohstoffpulvers 54 auf den Träger 18 ortselektiv, d.h. das zweite Rohstoffpulver 54 wird lediglich auf die Bereiche des Trägers 18 aufgetragen, die nicht von dem/den ersten Werkstückschichtabschnitt(en) 52 bedeckt sind.

Dementsprechend wird auf dem Träger 18 benachbart zu dem/den ersten Werkstückschichtabschnitt(en) 52 ein aus dem zweiten Rohstoffpulver 54 bestehender Rohstoffpulverschichtabschnitt erzeugt.

Dieser aus dem zweiten Rohstoffpulver 54 bestehende Rohstoffpulverschichtabschnitt wird mittels der Bestrahlungseinrichtung 16, wiederum unter der Steuerung der Steuereinheit 46, ortselektiv mit Laserstrahlung beaufschlagt. Der Energieeintrag der Laserstrahlung sorgt, wie bei der Bestrahlung des ersten Rohstoffpulvers 50, für ein lokales Aufschmelzen und/oder Sintern des zweiten Rohstoffpulvers 54 und folglich eine ortsselektive Verfestigung des aus dem zweiten Rohstoffpulver 54 bestehenden Rohstoffpulverschichtabschnitts. Dabei wird ein verfestigter zweiter Werkstückschichtabschnitt 56 aus dem zweiten Rohstoffpulver 54 erzeugt, der benachbart zu dem ersten Werkstückschichtabschnitt 52 auf dem Träger 18 angeordnet ist, siehe Figur 2.

In dem in den Figuren gezeigten Ausführungsbeispiel umfasst die erste Schicht des Werkstücks 12 lediglich einen ringförmigen zweiten Werkstückschichtabschnitt 56. Je nach Geometrie des herzustellenden dreidimensionalen Werkstücks 12 können aus dem aus dem zweiten Rohstoffpulver 54 bestehenden Rohstoffpulverschichtabschnitt aber auch mehrere zweite Werkstückschichtabschnitte 56 erzeugt werden, die dann benachbart zueinander und benachbart zu dem/den ersten Werkstückschichtabschnitt(en) 52 auf dem Träger 18 angeordnet sind. Ferner befindet sich auf dem Träger 18 in den Bereichen des aus dem zweiten Rohstoffpulver 54 bestehenden Rohstoffpulverschichtabschnitts, die nicht mit Laserstrahlung beaufschlagt wurden, auch noch nicht verfestigtes zweites Rohstoffpulver 54.

Im nächsten Schritt wird das nach der ortsselektiven Bestrahlung aus dem zweiten Rohstoffpulver 54 bestehenden Rohstoffpulverschichtabschnitts verbleibende nicht verfestigte zweite Rohstoffpulver 54 mittels der Heizeinrichtung 40 beheizt. Insbesondere wird dem zweiten Rohstoffpulver 54 von dem ersten Heizelement 42 der Heizeinrichtung 40 über seine von dem Träger 18 abgewandte Oberfläche Wärmeenergie in Form von Wärmestrahlung zugeführt. Gleichzeitig wird dem zweiten Rohstoffpulver 54 von dem zweiten Heizelement 44 der Heizeinrichtung 40 über seine dem Träger 18 zugewandte Oberfläche Wärmeenergie zugeführt, die von dem zweiten Heizelement 44 durch den Träger 18 geleitet wird.

Der Betrieb der Heizeinrichtung 40 mit den beiden Heizelementen 42, 44 wird dabei von der Steuereinheit 46 derart gesteuert, dass das nicht verfestigte zweite Rohstoffpulver 54 lediglich auf eine Temperatur aufgeheizt wird, die unterhalb der Schmelztemperatur des zweiten Rohstoffpulvers 54 liegt. Insbesondere steuert die Steuereinheit 46 den Betrieb der Heizeinrichtung 40 derart, dass das nicht verfestigte zweite Rohstoffpulver 54 für eine gewünschte Zeitspanne auf eine Temperatur aufgeheizt wird, die unterhalb der Schmelztemperatur des zweiten Rohstoffpulvers 54 liegt.

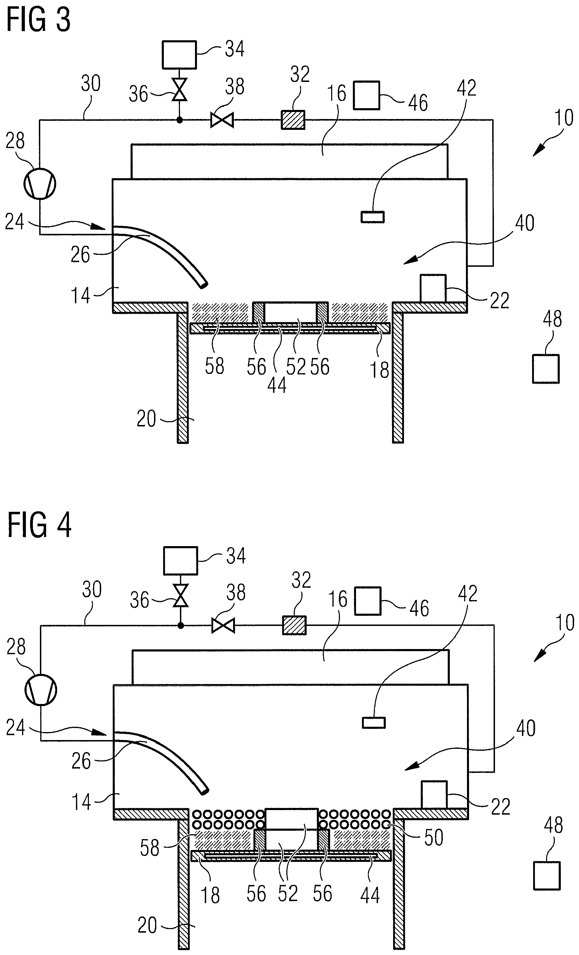

Durch die Beheizung mittels der Heizeinrichtung 40 wird in dem nicht verfestigten zweiten Rohstoffpulver 54 ein diffusionsgesteuerter Festphasensinterprozess in Gang gesetzt. Insbesondere wird der Betrieb der Heizeinrichtung 40 von der Steuereinheit 46 derart gesteuert, dass der Wärmeeintrag in das nicht verfestigte zweite Rohstoffpulver 54 ausreichend groß ist, um an Kontaktpunkten zwischen zueinander benachbarten Pulverkörnern des zweiten Rohstoffpulvers Materialbrücken bzw. sogenannte Sinterhälse entstehen zu lassen. Dadurch wird ein zusammenhängender poröser Sinterschichtabschnitt 58 erzeugt, der im Wesentlichen frei von Einzelpulverpartikeln ist. Der Sinterschichtabschnitt 58 erstreckt sich schließlich benachbart zu dem/den ersten Werkstückschichtabschnitt(en) 52 und benachbart zu dem/den zweiten Werkstückschichtabschnitt(en) 56, siehe Figur 3.

Der Wärmeeintrag in das nicht verfestigte zweite Rohstoffpulver 54 ist jedoch nicht ausreichend groß, um das zweite Rohstoffpulver 54 aufzuschmelzen zu lassen. Vielmehr wird ein Sinterschichtabschnitt 58 erzeugt, der Pulverkörner enthält, die zwar im Bereich ihrer Oberflächen miteinander verbunden sind, deren Form und Größe aber noch im Wesentlichen der Form und Größe der Pulverkörner des zweiten Rohstoffpulvers 54 entsprechen. Insbesondere wird das nicht verfestigte zweite Rohstoffpulver 54 zur Erzeugung des Sinterschichtabschnitts 58 durch einen Energieeintrag aufgeheizt, der geringer ist als ein Schmelzenergieeintrag, der eine Aufheizung des Materials des zweiten Rohstoffpulvers 54 auf seine Schmelztemperatur bewirken würde.

Der Sinterschichtabschnitt 58 weist beispielsweise eine durch Computertomographie oder durch Porositätsmessungen gemäß EN ISO 2738 bestimmbare Porosität von 10 bis 20 %, insbesondere eine durch Computertomographie oder durch Porositätsmessungen gemäß EN ISO 2738 bestimmbare Porosität von 10 bis 15 % auf und unterscheidet sich somit sowohl optisch als auch durch seine Materialeigenschaften von dem ebenfalls aus dem zweiten Rohstoffpulver 54 bestehenden zweite Werkstückschichtabschnitt 56, der beispielsweise eine durch Computertomographie oder durch Porositätsmessungen gemäß EN ISO 2738 bestimmbare Porosität von lediglich 0 bis 5 %, insbesondere eine durch Computertomographie oder durch Porositätsmessungen gemäß EN ISO 2738 bestimmbare Porosität von 0 bis 2 % aufweist.

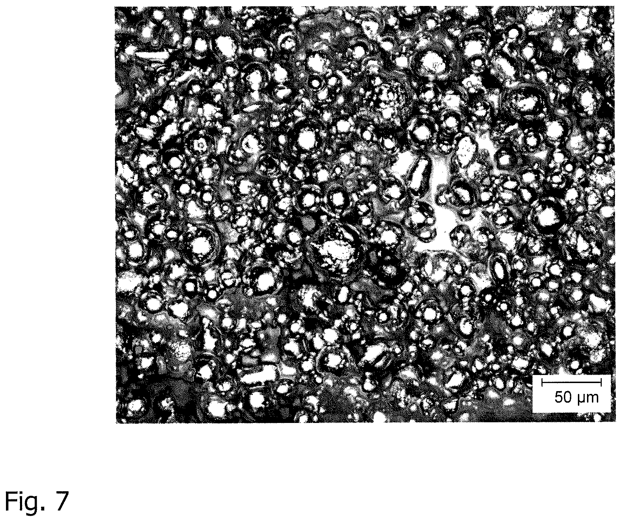

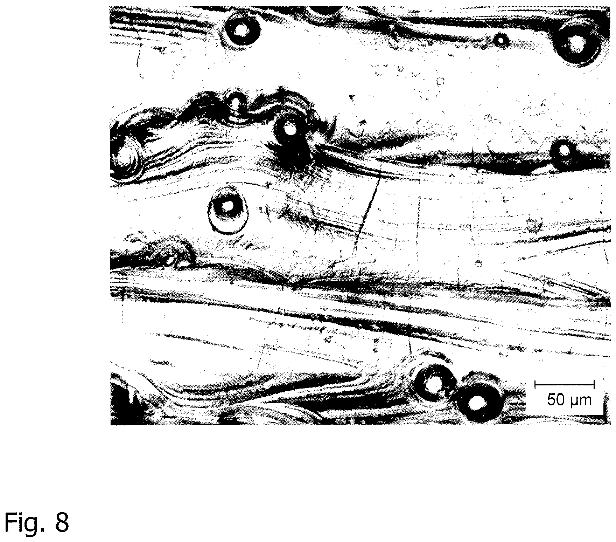

Figur 7 zeigt eine mikroskopische Aufnahme der Oberfläche eines Sinterschichtabschnitts 58, während Figur 8 eine mikroskopische Aufnahme der Oberfläche eines zweiten Werkstückschichtabschnitts 56 zeigt. Die Aufnahme des Sinterschichtabschnitts 58 in Figur 7 zeigt die angesinterten Pulverkörner, die im Bereich ihrer Oberflächen miteinander verbunden sind, deren Form und Größe aber noch im Wesentlichen der Form und Größe der Pulverkörner des zweiten Rohstoffpulvers 54 entsprechen. Im Gegensatz dazu zeigt die mikroskopische Aufnahme der Oberfläche des zweiten Werkstückschichtabschnitts 56 in Figur 8 eine vollständig umgeschmolzene Oberflächenstruktur, in der keine einzelnen Pulverpartikel mehr erkennbar sind.

Falls gewünscht, können die oben beschriebenen Schritte des Erzeugens eines zweiten Werkstückschichtabschnitts 56 durch Auftragen eines zweiten Rohstoffpulvers 54 auf den Träger 18 und anschließendes selektives Bestrahlen des zweiten Rohstoffpulvers 54 mit elektromagnetischer Strahlung oder Teilchenstrahlung vor der Beheizung von nicht verfestigtem zweiten Rohstoffpulver 54 wiederholt ausgeführt werden. Der zusammenhängende poröse Sinterschichtabschnitt 58 kann dann als "Block" aus mehreren übereinander angeordneten Rohstoffpulverschichtabschnitten erzeugt werden.

Ferner kann lediglich ein Teil des nicht verfestigten zweiten Rohstoffpulvers 54 beheizt und dadurch zu dem porösen Sinterschichtabschnitt 58 weiterverarbeitet werden. Beispielsweise kann darauf verzichtet werden, Bereiche des nicht verfestigten zweiten Rohstoffpulvers 54 zu beheizen und folglich zu sintern, die nach Fertigstellung des Bauteils in einer umschließenden Struktur aufgenommen sind.

Wie aus Figur 3 ersichtlich wird, befinden sich nach der Beheizung des nicht verfestigten zweiten Rohstoffpulvers 54 und der Erzeugung des Sinterschichtabschnitts 58 auf dem Träger 18 der verfestigte erste Werkstückschichtabschnitt 52, der verfestigte zweite Werkstückschichtabschnitt 56 und der den ersten und den zweiten Werkstückschichtabschnitt umgebende Sinterschichtabschnitt 58. Auf diese feste "Unterlage" wird nun eine weitere aus dem ersten Rohstoffpulver 50 bestehende Rohstoffpulverschicht aufgetragen, siehe Figur 4, und die obigen Schritte werden so oft wiederholt, bis das dreidimensionale Multimaterialwerkstück 12 Schicht für Schicht fertig aufgebaut ist und die gewünschte Form hat.

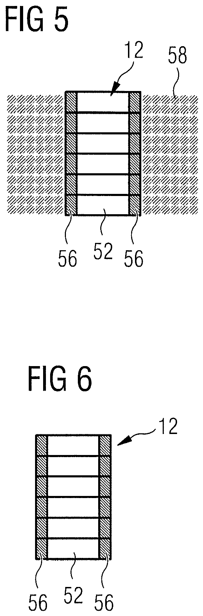

Nach der Fertigstellung des Multimaterialwerkstücks 12 wird das Werkstück 12 gemeinsam mit den das Werkstück 12 umgebenden übereinander angeordneten Sinterschichtabschnitten 58 aus der Baukammer 20 entnommen, siehe Figur 5. Mittels der Trenneinrichtung 48 wird das Werkstück 12 dann von den Sinterschichtabschnitten 58 getrennt. Insbesondere werden die Sinterschichtabschnitte 58 mittels der in Form einer Strahleinrichtung ausgebildeten Trenneinrichtung 48 behandelt, so dass einerseits das Werkstück 12 freigelegt, siehe Figur 6, und andererseits die die Sinterschichtabschnitte 58 bildenden Pulverkörner wieder vereinzelt werden. Diese Pulverkörner können dann beispielsweise durch Sieben aufbereitet und schließlich zur Erzeugung eines weiteren dreidimensionalen Werkstücks 12 wiederverwendet werden.

## Patentansprüche

1. Verfahren zur Herstellung eines dreidimensionalen Werkstücks (12) mit den Schritten:
(i) Auftragen eines ersten Rohstoffpulvers (50) auf einen Träger (18), um eine aus dem ersten Rohstoffpulver (50) bestehende Rohstoffpulverschicht zu erzeugen,
(ii) selektives Bestrahlen der aus dem ersten Rohstoffpulver (50) bestehenden Rohstoffpulverschicht mit elektromagnetischer Strahlung oder Teilchenstrahlung, um einen verfestigten ersten Werkstückschichtabschnitt (52) aus dem ersten Rohstoffpulver (50) zu erzeugen,
(iii) Entfernen von nicht verfestigtem ersten Rohstoffpulver (50) von dem Träger (18),
(iv) Auftragen eines zweiten Rohstoffpulvers (54) auf den Träger (18), um benachbart zu dem ersten Werkstückschichtabschnitt (52) einen aus dem zweiten Rohstoffpulver (54) bestehenden Rohstoffpulverschichtabschnitt zu erzeugen,
(v) selektives Bestrahlen des Rohstoffpulverschichtabschnitts mit elektromagnetischer Strahlung oder Teilchenstrahlung, um benachbart zu dem ersten Werkstückschichtabschnitt (52) einen verfestigten zweiten Werkstückschichtabschnitt (56) aus dem zweiten Rohstoffpulver (54) zu erzeugen,
(vi) Beheizen von nach der ortsselektiven Bestrahlung des aus dem zweiten Rohstoffpulver (54) bestehenden Rohstoffpulverschichtabschnitts verbleibendem nicht verfestigtem zweiten Rohstoffpulver (54), um benachbart zu dem ersten Werkstückschichtabschnitt (52) und dem zweiten Werkstückschichtabschnitt (56) einen zusammenhängenden porösen Sinterschichtabschnitt (58) aus dem zweiten Rohstoffpulver (54) zu erzeugen.

2. Verfahren nach Anspruch 1,
wobei die Schritte (i) bis (iii) vor der Durchführung des Schritts (iv) mehrfach ausgeführt werden, wobei bei jeder Wiederholung der Schritte (i) bis (iii) insbesondere ein anderes erstes Rohstoffpulver (50) zum Einsatz kommt, und/oder wobei die Schritte (iv) bis (v) vor der Durchführung des Schritts (vi) mehrfach ausgeführt werden, so dass im Schritt (vi) der zusammenhängende poröse Sinterschichtabschnitt (58) aus mehreren übereinander angeordneten Rohstoffpulverschichtabschnitten erzeugt wird, und/oder
wobei im Schritt (iv) lediglich ein Teil des nicht verfestigten zweiten Rohstoffpulvers (54) beheizt wird, um benachbart zu dem ersten Werkstückschichtabschnitt (52) und dem zweiten Werkstückschichtabschnitt (56) einen zusammenhängenden porösen Sinterschichtabschnitt (58) aus dem zweiten Rohstoffpulver (54) zu erzeugen.

3. Verfahren nach Anspruch 1 oder 2,
wobei das Material des zweiten Rohstoffpulvers (54) eine geringere Schmelztemperatur und/oder eine höhere Wärmeleitfähigkeit aufweist als das Material des ersten Rohstoffpulvers (50), und/oder
wobei das Material des zweiten Rohstoffpulvers (54) kostengünstiger ist als das Material des ersten Rohstoffpulvers (50).

4. Verfahren nach einem der Ansprüche 1 bis 3,
wobei das nicht verfestigte zweite Rohstoffpulver (54) zur Erzeugung des Sinterschichtabschnitts (58) auf eine Temperatur aufgeheizt wird, die unterhalb der Schmelztemperatur des Materials des zweiten Rohstoffpulvers (54) liegt, und/oder
wobei das nicht verfestigte zweite Rohstoffpulver (54) zur Erzeugung des Sinterschichtabschnitts (58) für eine gewünschte Zeitspanne beheizt wird, und/oder
wobei das nicht verfestigte zweite Rohstoffpulver (54) zur Erzeugung des Sinterschichtabschnitts (58) durch einen Energieeintrag aufgeheizt wird, der geringer ist als ein Schmelzenergieeintrag, der eine Aufheizung des Materials des zweiten Rohstoffpulvers (54) auf seine Schmelztemperatur bewirken würde.

5. Verfahren nach einem der Ansprüche 1 bis 4,
wobei:
- der Sinterschichtabschnitt (58) eine durch Computertomographie oder Porositätsmessungen gemäß EN ISO 2738 bestimmbare Porosität von 10 bis 20 %, insbesondere eine Porosität von 10 bis 15 % aufweist und/oder
- der zweite Werkstückschichtabschnitt (56) eine durch Computertomographie oder Porositätsmessungen gemäß EN ISO 2738 bestimmbare Porosität von 0 bis 5 %, insbesondere eine Porosität von 0 bis 2% aufweist und/oder
- der Sinterschichtabschnitt (58) im Bereich ihrer Oberflächen miteinander verbundene Pulverkörner enthält, deren Form und Größe im Wesentlichen der Form und Größe der Pulverkörner des zweiten Rohstoffpulvers (54) entsprechen.

6. Verfahren nach einem der Ansprüche 1 bis 5,
wobei das nicht verfestigte zweite Rohstoffpulver (54) mittels einer Heizeinrichtung (40) beheizt wird, die dem nicht verfestigten zweiten Rohstoffpulver (54) Wärmeenergie über eine von dem Träger (18) abgewandte Oberfläche des nicht verfestigten zweiten Rohstoffpulvers (54) zuführt und/oder eine dem Träger (18) zugewandte Oberfläche des nicht verfestigten zweiten Rohstoffpulvers (54) zuführt.

7. Verfahren nach Anspruch 6,
wobei die Heizeinrichtung (40) ein erstes Heizelement (42) umfasst, das oberhalb des Trägers (18) in einer den Träger (18) aufnehmenden Prozesskammer (14) angeordnet ist, und/oder wobei die Heizeinrichtung (40) ein zweites Heizelement (44) umfasst, das in den Träger (18) integriert oder unterhalb des Trägers (18) außerhalb der den Träger (18) aufnehmenden Prozesskammer (14) angeordnet ist.

8. Verfahren nach einem der Ansprüche 1 bis 7,
wobei das in Schritt (iii) von dem Träger (18) entfernte nicht verfestigte erste Rohstoffpulver (50) zur Herstellung eines dreidimensionalen Werkstücks (12) wiederverwendet wird.

9. Verfahren nach einem der Ansprüche 1 bis 8,
wobei der Sinterschichtabschnitt (58) nach Beendigung des Herstellprozesses zur Erzeugung eines dreidimensionalen Werkstücks (12) durch einen Trennprozess von dem fertigen dreidimensionalen Werkstück (12) getrennt wird, wobei der Trennprozess vorzugsweise einen Vereinzelungsprozess, insbesondere einen Strahlprozess zur Vereinzelung des Sinterschichtabschnitts (58) in einzelne Pulverkörner umfasst.

10. Verfahren nach Anspruch 9,
wobei die in dem Vereinzelungsprozess erzeugten einzelnen Pulverkörner des Sinterschichtabschnitts (58) zur Herstellung eines dreidimensionalen Werkstücks (12) wiederverwendet werden.

11. Vorrichtung zur Herstellung eines dreidimensionalen Werkstücks (12), die umfasst:
- eine Pulverauftragsvorrichtung (22), die dazu eingerichtet ist, ein erstes und ein zweites Rohstoffpulver (50, 54) auf einen Träger (18) aufzutragen,
- eine Bestrahlungseinrichtung (16), die dazu eingerichtet ist, eine auf den Träger (18) aufgetragene Rohstoffpulverschicht selektiv mit elektromagnetischer Strahlung oder Teilchenstrahlung zu bestrahlen,
- eine Entfernungseinrichtung (24), die dazu eingerichtet ist, nicht verfestigtes erstes Rohstoffpulver (50) von dem Träger (18) zu entfernen,
- eine Heizeinrichtung (40), die dazu eingerichtet ist, eine auf den Träger (18) aufgetragene Rohstoffpulverschicht zu beheizen, und
- eine Steuereinheit (46), die dazu eingerichtet ist, den Betrieb der Vorrichtung (10) derart zu steuern, dass
(i) mittels der Pulverauftragsvorrichtung (22) das erste Rohstoffpulver (50) auf den Träger (18) aufgetragen wird, um eine aus dem ersten Rohstoffpulver (50) bestehende Rohstoffpulverschicht zu erzeugen,
(ii) mittels der Bestrahlungseinrichtung (16) die aus dem ersten Rohstoffpulver (50) bestehende Rohstoffpulverschicht selektiv mit elektromagnetischer Strahlung oder Teilchenstrahlung bestrahlt wird, um einen verfestigten ersten Werkstückschichtabschnitt (52) aus dem ersten Rohstoffpulver (50) zu erzeugen,
(iii) mittels der Entfernungseinrichtung (24) nicht verfestigtes erstes Rohstoffpulver (50) von dem Träger (18) entfernt wird,
(iv) mittels der Pulverauftragsvorrichtung (22) das zweite Rohstoffpulver (54) auf den Träger (18) aufgetragen wird, um benachbart zu dem ersten Werkstückschichtabschnitt (52) einen aus dem zweiten Rohstoffpulver (54) bestehenden Rohstoffpulverschichtabschnitt zu erzeugen,
(v) mittels der Bestrahlungseinrichtung (16) der Rohstoffpulverschichtabschnitt mit elektromagnetischer Strahlung oder Teilchenstrahlung bestrahlt wird, um benachbart zu dem ersten Werkstückschichtabschnitt (52) einen verfestigten zweiten Werkstückschichtabschnitt (56) aus dem zweiten Rohstoffpulver (54) zu erzeugen, und
(vi) mittels der Heizeinrichtung (40) nach der ortsselektiven Bestrahlung des aus dem zweiten Rohstoffpulver (54) bestehenden Rohstoffpulverschichtabschnitts verbleibendes nicht verfestigtes zweites Rohstoffpulver (54) beheizt wird, um benachbart zu dem ersten Werkstückschichtabschnitt (52) und dem zweiten Werkstückschichtabschnitt (56) einen zusammenhängenden porösen Sinterschichtabschnitt (58) aus dem zweiten Rohstoffpulver (54) zu erzeugen.

12. Vorrichtung nach Anspruch 11,
wobei die Steuereinheit (46) ferner dazu eingerichtet ist, den Betrieb der Vorrichtung (10) derart zu steuern, dass die Schritte (i) bis (iii) vor der Durchführung des Schritts (iv) mehrfach ausgeführt werden, wobei bei jeder Wiederholung der Schritte (i) bis (iii) insbesondere ein anderes erstes Rohstoffpulver (50) zum Einsatz kommt, und/oder
wobei die Steuereinheit (46) ferner dazu eingerichtet ist, den Betrieb der Vorrichtung (10) derart zu steuern, dass die Schritte (iv) bis (v) vor der Durchführung des Schritts (vi) mehrfach ausgeführt werden, so dass im Schritt (vi) der zusammenhängende poröse Sinterschichtabschnitt (58) aus mehreren übereinander angeordneten Rohstoffpulverschichtabschnitten erzeugt wird, und/oder
wobei die Steuereinheit (46) ferner dazu eingerichtet ist, den Betrieb der Vorrichtung (10) derart zu steuern, dass im Schritt (iv) lediglich ein Teil des nicht verfestigten zweiten Rohstoffpulvers (54) beheizt wird, um benachbart zu dem ersten Werkstückschichtabschnitt (52) und dem zweiten Werkstückschichtabschnitt (56) einen zusammenhängenden porösen Sinterschichtabschnitt (58) aus dem zweiten Rohstoffpulver (54) zu erzeugen.

13. Vorrichtung nach Anspruch 11 oder 12,
wobei die Steuereinheit (46) ferner dazu eingerichtet ist, die Heizeinrichtung (40) derart zu steuern,
dass das nicht verfestigte zweite Rohstoffpulver (54) zur Erzeugung des Sinterschichtabschnitts (58) auf eine Temperatur aufgeheizt wird, die unterhalb der Schmelztemperatur des Materials des zweiten Rohstoffpulvers (54) liegt, und/oder dass das nicht verfestigte zweite Rohstoffpulver (54) zur Erzeugung des Sinterschichtabschnitts (58) für eine gewünschte Zeitspanne beheizt wird, und/oder dass das nicht verfestigte zweite Rohstoffpulver (54) zur Erzeugung des Sinterschichtabschnitts (58) durch einen Energieeintrag aufgeheizt wird, der geringer ist als ein Schmelzenergieeintrag, der eine Aufheizung des Materials des zweiten Rohstoffpulvers (54) auf seine Schmelztemperatur bewirken würde.

14. Vorrichtung nach einem der Ansprüche 11 bis 13,
wobei die Heizeinrichtung (40) dazu eingerichtet ist, dem nicht verfestigten zweiten Rohstoffpulver (54) Wärmeenergie über eine von dem Träger (18) abgewandte Oberfläche des nicht verfestigten zweiten Rohstoffpulvers (54) und/oder eine dem Träger (18) zugewandte Oberfläche des nicht verfestigten zweiten Rohstoffpulvers (54) zuzuführen,
wobei die Heizeinrichtung (40) insbesondere ein erstes Heizelement (42) umfasst, das oberhalb des Trägers (18) in einer den Träger (18) aufnehmenden Prozesskammer (14) angeordnet ist, und/oder
wobei die Heizeinrichtung (40) insbesondere ein zweites Heizelement (44) umfasst, das in den Träger (18) integriert oder unterhalb des Trägers (18) außerhalb der den Träger (18) aufnehmenden Prozesskammer (14) angeordnet ist.

15. Vorrichtung nach einem der Ansprüche 10 bis 14,
die ferner eine Trenneinrichtung (48) umfasst, die dazu eingerichtet ist, den Sinterschichtabschnitt (58) nach Beendigung des Herstellprozesses zur Erzeugung eines dreidimensionalen Werkstücks (12) von dem fertigen dreidimensionalen Werkstück (12) zu trennen, wobei die Trenneinrichtung (48) insbesondere dazu eingerichtet ist, den Sinterschichtabschnitt (58) in einzelne Pulverkörner zu vereinzeln.

## Claims

1. Method for producing a three-dimensional workpiece (12) with the steps:
(i) applying a first raw material powder (50) to a substrate (18) in order to produce a raw material powder layer consisting of the first raw material powder (50),
(ii) selectively irradiating the raw material powder layer consisting of the first raw material powder (50) with electromagnetic radiation or particle radiation in order to produce a solidified first workpiece layer portion (52) from the first raw material powder (50),
(iii) removing non-solidified first raw material powder (50) from the substrate (18),
(iv) applying a second raw material powder (54) to the substrate (18) in order to produce a raw material powder layer portion consisting of the second raw material powder (54) adjacent to the first workpiece layer portion (52),
(v) selectively irradiating the raw material powder layer portion with electromagnetic radiation or particle radiation in order to produce a solidified second workpiece layer portion (56) from the second raw material powder (54) adjacent to the first workpiece layer portion (52),
(vi) heating of non-solidified second raw material powder (54) remaining following site-selective irradiation of the raw material powder layer portion consisting of the second raw material powder (54) in order to produce a continuous porous sintered layer portion (58) from the second raw material powder (54) adjacent to the first workpiece layer portion (52) and the second workpiece layer portion (56).

2. Method according to claim 1,
the steps (i) to (iii) being executed multiple times before carrying out step (iv), wherein with each repetition of steps (i) to (iii) in particular a different first raw material powder (50) is used, and/or
the steps (iv) to (v) being executed multiple times before carrying out step (vi), so that in step (vi) the continuous porous sintered layer portion (58) is produced from several raw material powder layer portions arranged above one another, and/or
in step (iv) only a portion of the non-solidified second raw material powder (54) being heated in order to produce a continuous porous sintered layer portion (58) from the second raw material powder (54) adjacent to the first workpiece layer portion (52) and the second workpiece layer portion (56).

3. Method according to claim 1 or 2,
the material of the second raw material powder (54) having a lower melting temperature and/or a higher thermal conductivity than the material of the first raw material powder (50), and/or
the material of the second raw material powder (54) being cheaper than the material of the first raw material powder (50).

4. Method according to any one of claims 1 to 3,
the non-solidified second raw material powder (54) for producing the sintered layer portion (58) being heated to a temperature that is below the melting temperature of the material of the second raw material powder (54), and/or
the non-solidified second raw material powder (54) for producing the sintered layer portion (58) being heated for a desired time span, and/or
the non-solidified second raw material powder (54) for producing the sintered layer portion (58) being heated by an energy input that is smaller than a melt energy input that would cause heating of the material of the second raw material powder (54) to its melting temperature.

5. Method according to any one of claims 1 to 4,
wherein:
- the sintered layer portion (58) has a porosity, determinable by computer tomography or by porosity measurements according to EN ISO 2738, of 10 to 20%, in particular a porosity of 10 to 15% and/or
- the second workpiece layer portion (56) has a porosity, determinable by computer tomography or by porosity measurements according to EN ISO 2738, of 0 to 5%, in particular a porosity of 0 to 2% and/or
- the sintered layer portion (58) contains powder grains that are bonded to one another in the area of their surfaces and have a shape and size that substantially correspond to the shape and size of the powder grains of the second raw material powder (54).

6. Method according to any one of claims 1 to 5,
the non-solidified second raw material powder (54) being heated by means of a heating apparatus (40), which supplies thermal energy to the non-solidified second raw material powder (54) via a surface of the non-solidified second raw material powder (54) that faces away from the substrate (18) and/or a surface of the non-solidified second raw material powder (54) that faces the substrate (18).

7. Method according to claim 6,
the heating apparatus (40) comprising a first heating element (42), which is arranged above the substrate (18) in a process chamber (14) accommodating the substrate (18), and/or the heating apparatus (40) comprising a second heating element (44), which is integrated into the substrate (18) or is arranged below the substrate (18) outside of the process chamber (14) accommodating the substrate (18).

8. Method according to any one of claims 1 to 7,
the non-solidified first raw material powder (50) removed from the substrate (18) in step (iii) being reused for the production of a three-dimensional workpiece (12).

9. Method according to any one of claims 1 to 8,
the sintered layer portion (58) being separated, on completion of the production process for producing a three-dimensional workpiece (12), from the three-dimensional workpiece (12) by a separation process, the separation process preferably comprising a singulation process, in particular a blasting process for singulating the sintered layer portion (58) into individual powder grains.

10. Method according to claim 9,
the individual powder grains of the sintered layer portion (58) that are produced in the singulation process being reused to produce a three-dimensional workpiece (12).

11. Device for producing a three-dimensional workpiece (12), which device comprises:
- a powder application device (22), which is adapted to apply a first and a second raw material powder (50, 54) to a substrate (18),
- an irradiation apparatus (16), which is adapted to selectively irradiate a raw material powder layer applied to the substrate (18) with electromagnetic radiation or particle radiation,
- a removal apparatus (24), which is adapted to remove non-solidified first raw material powder (50) from the substrate (18),
- a heating apparatus (40), which is adapted to heat a raw material powder layer applied to the substrate (18), and
- a control unit (46), which is adapted to control the operation of the device (10) in such a way that
(i) the first raw material powder (50) is applied to the substrate (18) by means of the powder application device (22) in order to produce a raw material powder layer consisting of the first raw material powder (50),
(ii) the raw material powder layer consisting of the first raw material powder (50) is selectively irradiated with electromagnetic radiation or particle radiation by means of the irradiation apparatus (16) in order to produce a solidified first workpiece layer portion (52) from the first raw material powder (50),
(iii) non-solidified first raw material powder (50) is removed from the substrate (18) by means of the removal apparatus (24),
(iv) the second raw material powder (54) is applied to the substrate (18) by means of the powder application device (22) in order to produce a raw material powder layer portion consisting of the second raw material powder (54) adjacent to the first workpiece layer portion (52),
(v) the raw material powder layer portion is irradiated with electromagnetic radiation or particle radiation by means of the irradiation apparatus (16) in order to produce a solidified second workpiece layer portion (56) from the second raw material powder (54) adjacent to the first workpiece layer portion (52), and
(vi) non-solidified second raw material powder (54) remaining following site-selective irradiation of the raw material powder layer portion consisting of the second raw material powder (54) is heated by means of the heating apparatus (40) in order to produce a continuous porous sintered layer portion (58) from the second raw material powder (54) adjacent to the first workpiece layer portion (52) and the second workpiece layer portion (56).

12. Device according to claim 11,
the control unit (46) further being adapted to control the operation of the device (10) such that the steps (i) to (iii) are executed multiple times before carrying out step (iv), wherein on each repetition of steps (i) to (iii) in particular a different first raw material powder (50) is used, and/or
the control unit (46) further being adapted to control the operation of the device (10) such that the steps (iv) to (v) are executed multiple times before carrying out step (vi), so that in step (vi) the continuous porous sintered layer portion (58) is produced from several raw material powder layer portions arranged above one another, and/or the control unit (46) further being adapted to control the operation of the device (10) such that in step (iv) only a portion of the non-solidified second raw material powder (54) is heated in order to produce a continuous porous sintered layer portion (58) from the second raw material powder (54) adjacent to the first workpiece layer portion (52) and the second workpiece layer portion (56).

13. Device according to claim 11 or 12,
the control unit (46) further being adapted to control the heating apparatus (40) in such a way
that the non-solidified second raw material powder (54) for producing the sintered layer portion (58) is heated to a temperature that is below the melting temperature of the material of the second raw material powder (54), and/or
that the non-solidified second raw material powder (54) for producing the sintered layer portion (58) is heated for a desired time span, and/or
that the non-solidified second raw material powder (54) for producing the sintered layer portion (58) is heated by an energy input that is smaller than a melt energy input that would cause heating of the material of the second raw material powder (54) to its melting temperature.

14. Device according to any one of claims 11 to 13,
the heating apparatus (40) being adapted to supply thermal energy to the non-solidified second raw material powder (54) via a surface of the non-solidified raw material powder (54) that faces away from the substrate (18) and/or a surface of the non-solidified raw material powder (54) that faces the substrate (18), the heating apparatus (40) in particular comprising a first heating element (42), which is arranged above the substrate (18) in a process chamber (14) accommodating the substrate (18), and/or the heating apparatus (40) in particular comprising a second heating element (44), which is integrated into the substrate (18) or is arranged below the substrate (18) outside of the process chamber (14) accommodating the substrate (18).

15. Device according to any one of claims 10 to 13,
further comprising a separation apparatus (48), which is adapted to separate the sintered layer portion (58), on completion of the production process for producing a three-dimensional workpiece (12), from the finished three-dimensional workpiece (12), the separation apparatus (48) in particular being adapted to singulate the sintered layer portion (58) into individual powder grains.

## Revendications

1. Procédé de fabrication d'une pièce tridimensionnelle (12) comprenant les étapes:
(i) appliquer une première poudre de matière première (50) sur un support (18) pour produire une couche de poudre de matière première constituée de la première poudre de matière première (50),
(i) exposer de manière sélective la couche de poudre de matière première constituée d'une première poudre de matière première (50) au rayonnement électromagnétique ou au rayonnement corpusculaire pour produire une première section de couche de pièce (52) solidifiée à partir de la première poudre de matière première (50),
(iii) retirer la première poudre de matière première (50) non solidifiée du support (18),
(iv) appliquer une seconde poudre de matière première (54) sur le support (18) pour produire de manière adjacente à la première section de couche de pièce (52) une section de couche de poudre de matière première constituée de la seconde poudre de matière première (54),
(v) exposer de manière sélective la section de couche de poudre de matière première au rayonnement électromagnétique ou au rayonnement corpusculaire pour produire à proximité de la première section de couche de pièce (52) une seconde section de couche de pièce (56) solidifiée à partir de la seconde poudre de matière première (54),
(vi) chauffer la seconde poudre de matière première (54) non solidifiée, restante après le rayonnement localisé de la section de couche de matière première constituée de la seconde poudre de matière première (54) pour produire à proximité de la première section de couche de pièce (52) et de la seconde section de couche de pièce (56) une section de couche frittée (58) poreuse contiguë à partir de la seconde poudre de matière première (54).

2. Procédé selon la revendication 1,
dans lequel les étapes (i) à (iii) sont réalisées plusieurs fois avant la réalisation de l'étape (iv), dans lequel à chaque répétition des étapes (i) à (iii) une autre première poudre de matière première (50) est employée, et/ou
dans lequel les étapes (iv) à (v) sont réalisées plusieurs fois avant la réalisation de l'étape (vi), de sorte que dans l'étape (vi) la section de couche frittée (58) poreuse contiguë soit produite à partir de plusieurs sections de couche de poudre de matière première empilées les unes sur les autres, et/ou
dans lequel dans l'étape (vi) seule une partie de la seconde poudre de matière première non solidifiée est chauffée, pour produire de manière adjacente à la première section de couche de pièce (52) et à la seconde section de couche de pièce (56) une section de couche frittée (58) poreuse contiguë à partir de la seconde poudre de matière première (54).

3. Procédé selon la revendication 1 ou 2,
dans lequel le matériau de la seconde poudre de matière première (54) présente une température de fusion inférieure et/ou une conductivité thermique supérieure que le matériau de la première poudre de matière première (50), et/ou dans lequel le matériau de la seconde poudre de matière première (54) est moins onéreux que le matériau de la première poudre de matière première (50).

4. Procédé selon l'une quelconque des revendications 1 à 3,
dans lequel la seconde poudre de matière première (54) non solidifiée est chauffée pour produire la section de couche frittée (58) à une température qui se situe en dessous de la température de fusion du matériau de la seconde poudre de matière première (54), et/ou
dans lequel la seconde poudre de matière première (54) non solidifiée est chauffée pour produire la section de couche frittée (58) pendant un laps de temps souhaité, et/ou
dans lequel la seconde poudre de matière première (54) non solidifiée est chauffée pour produire la section de couche frittée (58) par un apport en énergie, qui est inférieur à un apport en énergie de fusion qui entraînerait un chauffage du matériau de la seconde poudre de matière première (54) à sa température de fusion.

5. Procédé selon l'une quelconque des revendications 1 à 4,
dans lequel:
- la section de couche frittée (58) présente une porosité déterminée entre 10 et 20 %, en particulier une porosité entre 10 et 15 % par tomodensitométrie ou par mesures de porosité selon EN ISO 2738 et/ou
- la seconde section de couche de pièce (56) présente une porosité déterminée entre 0 et 5 %, en particulier une porosité entre 0 et 2 % par tomodensitométrie ou par mesures de porosité selon EN ISO 2738 et/ou
- la section de couche frittée (58) contient dans la zone de sa surface des grains de poudre liés les uns aux autres dont la forme et la taille correspondent sensiblement à la forme et la taille des grains de poudre de la seconde poudre de matière première (54).

6. Procédé selon l'une quelconque des revendications 1 à 5,
dans lequel la seconde poudre de matière première (54) non solidifiée est chauffée au moyen d'un dispositif de chauffage (40) qui achemine vers la seconde poudre de matière première (54) non solidifiée l'énergie thermique par une surface opposée au support (18) de la seconde poudre de matière première non solidifiée et/ou l'achemine par une surface orientée vers le support (18) de la seconde poudre de matière première (54) non solidifiée.

7. Procédé selon la revendication 6,
dans lequel le dispositif de chauffage (40) comprend un premier élément de chauffage (42) qui est disposé au-dessus du support (18) dans une chambre de processus (14) logeant le support (18), et/ou dans lequel le dispositif de chauffage (40) comprend un second élément de chauffage (44) qui est intégré dans le support (18) ou est disposé en dessous du support (18) à l'extérieur de la chambre de processus (14) logement le support (18).

8. Procédé selon l'une quelconque des revendications 1 à 7,
dans lequel dans l'étape (iii) la première poudre de matière première (50) non solidifiée retirée du support (18) est réutilisée pour produire une pièce tridimensionnelle (12).

9. Procédé selon l'une quelconque des revendications 1 à 8,
dans lequel la section de couche frittée (58), après la fin du processus de production, est séparée de la pièce tridimensionnelle fabriquée par un processus de séparation pour produire une pièce tridimensionnelle (12), dans lequel le processus de séparation comprend de préférence un processus de séparation, en particulier un processus par rayonnement pour séparer la section de couche frittée (58) en différents grains de poudre.

10. Procédé selon la revendication 9,
dans lequel les différents grains de poudre de la section de couche frittée (58) produits dans le processus de séparation sont réutilisés pour fabriquer une pièce tridimensionnelle (12).

11. Dispositif de fabrication d'une pièce tridimensionnelle (12) qui comprend:
- un dispositif d'application de poudre (22) qui est conçu pour appliquer une première et une seconde poudre de matière première (50, 54) sur un support (18),
- un dispositif de rayonnement (16) qui est conçu pour exposer de manière sélective une couche de poudre de matière première appliquée sur le support (18) au rayonnement électromagnétique ou au rayonnement corpusculaire,
- un dispositif de retrait (24) qui est conçu pour retirer la première poudre de matière première (50) non solidifiée du support (18),
- un dispositif de chauffage (40) qui est conçu pour chauffer une couche de poudre de matière première appliquée sur le support (18), et
- une unité de commande (46) qui est conçue pour commander le fonctionnement du dispositif (10) de sorte que
(i) au moyen du dispositif d'application de poudre (22), la première poudre de matière première (50) soit appliquée sur le support (18) pour produire une couche de poudre de matière première à partir de la première poudre de matière première (50),
(ii) au moyen du dispositif de rayonnement (16) la couche de poudre de matière première constituée de la première poudre de matière première (50) est exposée de manière sélective au rayonnement électromagnétique ou au rayonnement corpusculaire pour produire une première section de couche de pièce (52) solidifiée à partir de la première poudre de matière première (50),
(iii) au moyen du dispositif de retrait (24) la première poudre de matière première (50) non solidifiée est retirée du support (18),
(iv) au moyen du dispositif d'application de poudre (22) la seconde poudre de matière première (54) est appliquée sur le support (18) pour produire de manière adjacente à la première section de couche de pièce (52) une section de couche de poudre de matière première constituée de la seconde poudre de matière première (54),
(v) au moyen du dispositif de rayonnement (16) la section de couche de poudre de matière première est exposée au rayonnement électromagnétique ou au rayonnement corpusculaire pour produire de manière adjacente à la première section de couche de pièce (52) une seconde section de couche de pièce (56) solidifiée à partir de la seconde poudre de matière première (54), et
(vi) au moyen du dispositif de chauffage (40) après le rayonnement localisé de la section de couche de poudre de matière première constituée de la seconde poudre de matière première (54), la seconde poudre de matière première (54) non solidifiée, restante est chauffée, pour produire de manière adjacente à la première section de couche de pièce (52) et à la seconde section de couche de pièce (56) une section de couche frittée (58) poreuse contiguë à partir de la seconde poudre de matière première (54).

12. Dispositif selon la revendication 11,
dans lequel l'unité de commande (46) est en outre conçue pour commander le fonctionnement du dispositif (10) de sorte que les étapes (i) à (iii) soient réalisées plusieurs fois avant la réalisation de l'étape (iv), dans lequel à chaque répétition des étapes (i) à (iii) une autre première poudre de matière première (50) est notamment employée, et/ou
dans lequel l'unité de commande (46) est conçue pour commander le fonctionnement du dispositif (10) de sorte que les étapes (iv) à (v) sont réalisées plusieurs fois avant la réalisation de l'étape (vi), de sorte que dans l'étape (vi) la section de couche frittée (58) poreuse contiguë soit produite à partir de plusieurs sections de couche de poudre de matière première empilées les unes sur les autres, et/ou
dans lequel l'unité de commande (46) est conçue pour commander le fonctionnement du dispositif (10) de sorte que dans l'étape (vi) seule une partie de la seconde poudre de matière première (54) non solidifiée soit chauffée, pour produire de manière adjacente à la première section de couche de pièce (52) et à la seconde section de couche de pièce (56) une section de couche frittée (58) poreuse contiguë à partir de la seconde poudre de matière première (54).

13. Dispositif selon la revendication 11 ou 12,
dans lequel l'unité de commande (46) est en outre conçue pour commander le dispositif de chauffage (40) de sorte que
la seconde poudre de matière première non solidifiée (54) soit chauffée pour produire la section de couche frittée (58) à une température qui se situe en dessous de la température de fusion du matériau de la seconde poudre de matière première (54), et/ou
que la seconde poudre de matière première (54) non solidifiée soit chauffée pour produire la section de couche frittée (58) pendant un laps de temps souhaité, et/ou que la seconde poudre de matière première (54) non solidifiée soit chauffée pour produire la section de couche frittée (58) par un apport en énergie, qui est inférieur à un apport en énergie de fusion qui entraînerait un chauffage du matériau de la seconde poudre de matière première (54) à sa température de fusion.

14. Dispositif selon l'une quelconque des revendications 11 à 13,
dans lequel le dispositif de chauffage (40) est conçu pour acheminer vers la seconde poudre de matière première (54) non solidifiée l'énergie thermique par une surface opposée au support (18) de la seconde poudre de matière première (54) non solidifiée et/ou par une surface orientée vers le support (18) de la seconde poudre de matière première (54) non solidifiée,
dans lequel le dispositif de chauffage (40) comprend notamment un premier élément de chauffage (42) qui est disposé au-dessus du support dans une chambre de processus (14) logeant le support (18), et/ou
dans lequel le dispositif de chauffage (40) comprend notamment un second élément de chauffage (44) qui est intégré dans le support (18) ou en dessus du support (18) à l'extérieur de la chambre de processus (14) logeant le support (18).

15. Dispositif selon l'une quelconque des revendications 10 à 14,
qui comprend en outre un dispositif de séparation (48) qui est conçu pour séparer la section de couche frittée (58) de la pièce (12) tridimensionnelle terminée après la fin du processus de fabrication pour produire une pièce (12) tridimensionnelle, dans lequel le dispositif de séparation (48) est notamment conçu pour séparer la section de couche frittée (58) en différents grains de poudre.
